# EUROPEAN PATENT APPLICATION

(11) **EP 4 843 967 A1**
(43) Date of publication of application: **25.11.2026**
(21) Application number: 25178522.6
(22) Date of filing: 23.05.2025
(51) Int. Cl.: C04B 18/04, C04B 28/00, C04B 40/00

(54) **A BINDING COMPOSITION AND METHOD FOR PRODUCING THE BINDING COMPOSITION**

(71) Applicant: The Provost, Fellows, Foundation Scholars and the other members of Board, of the College of the Holy and Undivided Trinity of Queen Elizabeth, Dublin 2 (IE)
(72) Inventor: Pavia, Sara, Dublin, Dublin 2 (IE); Lei, Zehao, Dublin, Dublin 2 (IE)
(74) Representative: FRKelly

(57) **Abstract**

The present invention relates to binding compositions. Also disclosed are methods for producing the binding compositions and use of the binding compositions as binders, cements, and in concretes. Also disclosed are articles comprising the binding compositions, which articles can find utility as construction commodities such as bricks, tiles, blocks, and other refractory materials.

## Description

### Field of the invention

The present invention relates to binding compositions. Also disclosed are methods for producing the binding compositions and use of the binding compositions as binders, cements, and in concretes. Also disclosed are articles comprising the binding compositions, which articles can find utility as construction commodities such as bricks, tiles, blocks, and other refractory materials.

### Background to the invention

Water serves as an essential element for the sustenance of all known life forms, and the provision of clean water holds paramount significance for both human health and the broader societal fabric. Against the backdrop of expanding global populations, ageing infrastructure, compromised source-water quality, and other factors; the task of guaranteeing secure and dependable water supply to communities has evolved into an increasingly formidable challenge.

The intake structure of water treatment plants draws in raw water from surface sources such as lakes or reservoirs. In surface water, insoluble impurities and microorganisms tend to settle at a sluggish pace or even remain suspended due to their inherent mutually repelling surface charge. To enhance the separation of these impurities from the water, coagulants containing opposite charges (typically metal salts) are introduced into the water. This addition of coagulants helps counteract the repulsive forces, allowing the particles to aggregate, a phenomenon referred to as "coagulation". Following coagulation, the unstable charged particles, alongside insoluble complexes formed by metal ions binding to soluble organic matter, and organic matter and impurities adsorbed on the coagulant's surface, congregate to form larger agglomerates or flocs. This facilitates their more straightforward removal from the water, a process termed "flocculation". Coagulation and flocculation have become integral to drinking water treatment facilities and have garnered substantial recognition within the field of water treatment. Their popularity is rooted in their salient attributes, including minimal energy consumption, uncomplicated design, user-friendly operation, high efficiency, nontoxic properties, and cost-effectiveness.

After the CF process, a considerable amount of sludge is filtered out and referred to as water treatment sludge or drinking water treatment sludge. Salts of aluminium are the most commonly used coagulation chemicals in drinking water treatment plants due to their low cost, wide availability, and high efficiency. When the aluminium salts are used as the coagulants, the sludge produced is specifically named alum sludge (AS). AS is an underrated waste which may contain soil particles and organic and aluminium content. As estimated, Europe and the United States generate 100,000 tonnes and more than 2 million tonnes of solid residues per year, respectively.

In some countries, such as Egypt and India, AS is directly disposed into rivers or landfill. Nonetheless, the approach of direct disposal is far from optimal, given its potential to result in resource wasting and the pollution of both water and soil. A more efficient strategy lies in recycling AS waste within building materials. The extensive consumption of construction materials on a voluminous scale presents a means to swiftly utilize substantial quantities of generated AS waste. Furthermore, the broad accessibility of AS across various geographic regions aligns with widespread building construction activities. This compatibility facilitates the integration of AS waste into building materials, thereby maximizing its utility and minimizing its environmental impact.

However, the organic matter within AS can significantly hinder the cement reaction, leading to prolonged setting times. Doses of calcined AS exceeding 5% can cause a reduction in the mechanical strength of binders, cements, and concretes. An increase in AS dosage can cause a significant increase in the porosity of cement leading to strength reduction. Owing to the high content of reactive aluminium, adding high dosages of AS in Portland cement systems may lead to rapid setting and durability issues. These challenges, undoubtedly, have constrained the broader application of AS in construction materials.

Geopolymer has been considered a more sustainable alternative to Portland cement materials. It is formulated using raw materials known as precursors, typically rich in silica and aluminium, which can be sourced from various origins. This flexibility in precursor selection offers an avenue for recycling local waste materials to produce reliable and complementary binders. Traditional geopolymers have relied on alkaline activators, often in the form of concentrated aqueous solutions of alkali metal hydroxides or silicates. However, these activators are often sticky, corrosive, and hazardous. One-part geopolymer was developed as the response to the user-unfriendly characteristics of traditional "two-part" geopolymer. In one-part geopolymer systems, the geopolymer behaves more like Portland cement, requiring only the addition of water to create a homogenous and reliable binder. In 1940, it was proposed to pre-mix slag and solid sodium hydroxide and subsequently add water to produce binders, which is considered the first attempt at a one-part geopolymer.

There is a need for binding compositions for use as binders, cements, and in concretes in construction commodities such as bricks, tiles, blocks, and other refractory materials.

### Summary of the invention

According to a first aspect of the present invention there is provided a binding composition comprising a water treatment sludge and slag.

Optionally, the binding composition consists essentially of the water treatment sludge and the slag. Further optionally, the binding composition consists of the water treatment sludge and the slag.

Optionally, the binding composition comprises a water treatment sludge and slag in a ratio of at least 10:90 (w/w, a water treatment sludge:slag).

Further optionally, the binding composition comprises a water treatment sludge and slag in a ratio of at least 20:80 (w/w, a water treatment sludge:slag), optionally at least 30:70 (w/w, a water treatment sludge:slag), optionally at least 40:60 (w/w, a water treatment sludge:slag), optionally at least 50:50 (w/w, a water treatment sludge:slag), optionally at least 60:40 (w/w, a water treatment sludge:slag), optionally at least 70:30 (w/w, a water treatment sludge:slag), optionally at least 80:20 (w/w, a water treatment sludge:slag), optionally at least 90:10 (w/w, a water treatment sludge:slag).

Still further optionally, the binding composition comprises a water treatment sludge and slag in a ratio of at least 20:80 (w/w, a water treatment sludge:slag), optionally at least 30:70 (w/w, a water treatment sludge:slag).

Optionally, the binding composition comprises a water treatment sludge and slag in a ratio of between 10:90 (w/w, a water treatment sludge:slag) and 90:10 (w/w, a water treatment sludge:slag), optionally between 20:80 (w/w, a water treatment sludge:slag) and 80:20 (w/w, a water treatment sludge:slag), optionally between 30:70 (w/w, a water treatment sludge:slag) and 70:30 (w/w, a water treatment sludge:slag), optionally between 40:60 (w/w, a water treatment sludge:slag) and 60:40 (w/w, a water treatment sludge:slag).

Further optionally, the binding composition comprises a water treatment sludge and slag in a ratio of between 20:80 (w/w, a water treatment sludge:slag) and 80:20 (w/w, a water treatment sludge:slag), optionally between 30:70 (w/w, a water treatment sludge:slag) and 70:30 (w/w, a water treatment sludge:slag).

Preferably, the binding composition comprises a water treatment sludge and slag in a ratio of 20:80 or 30:70 (w/w, a water treatment sludge:slag).

Optionally, the water treatment sludge is a calcinated water treatment sludge.

Optionally, the calcinated water treatment sludge has been heated to a temperature of at least 300 deg°C. Further optionally, the calcinated water treatment sludge has been heated to a temperature of at least 400 deg°C, optionally at least 500 deg°C, optionally at least 600 deg°C, optionally at least 700 deg°C, optionally at least 800 deg°C, optionally at least 900 deg°C, optionally at least 1000 deg°C, optionally at least 1100 deg°C, optionally at least 1200 deg°C, optionally at least 1300 deg°C, optionally at least 1400 deg°C, optionally at least 1500 deg°C.

Preferably, the calcinated water treatment sludge has been heated to a temperature of at least 500 deg°C.

Optionally or additionally, the calcinated water treatment sludge has been heated for at least 30 minutes. Further optionally or additionally, the calcinated water treatment sludge has been heated for at least 45 minutes, optionally at least 60 minutes, optionally at least 75 minutes, optionally at least 90 minutes, optionally at least 105 minutes, optionally at least 120 minutes, optionally at least 135 minutes, optionally at least 150 minutes, optionally at least 165 minutes, optionally at least 180 minutes, optionally at least 195 minutes, optionally at least 210 minutes, optionally at least 225 minutes, optionally at least 240 minutes.

Preferably, the calcinated water treatment sludge has been heated for at least 180 minutes.

Optionally, the calcinated water treatment sludge has been heated in a reducing atmosphere.

Optionally or additionally, the calcinated water treatment sludge has been heated in the absence of oxygen. Further optionally or additionally, the calcinated water treatment sludge has been heated a reducing atmosphere in the absence of oxygen.

Optionally, the water treatment sludge is a liquid suspension. Alternatively, the water treatment sludge is a solid.

Preferably, the water treatment sludge is a solid.

Optionally, the water treatment sludge is a solid having a water content of at least 5%(w/w). Further optionally, the water treatment sludge is a solid having a water content of at least 10%(w/w), optionally at least 15%(w/w), optionally at least 20%(w/w), optionally at least 25%(w/w), optionally at least 30%(w/w), optionally at least 35%(w/w), optionally at least 40%(w/w), optionally at least 45%(w/w), optionally at least 50%(w/w), optionally at least 55%(w/w), optionally at least 60%(w/w), optionally at least 65%(w/w), optionally at least 70%(w/w), optionally at least 75%(w/w), optionally at least 80%(w/w), optionally at least 82.5%(w/w), optionally at least 85%(w/w), optionally at least 90%(w/w), optionally at least 95%(w/w).

Preferably, the water treatment sludge is a solid having a water content of at least 82.5%(w/w).

Optionally, the water treatment sludge has a loss on ignition (LOI) of less than 90%. Optionally, the water treatment sludge has a loss on ignition (LOI) of less than 85%, optionally less than 80%, optionally less than 75%, optionally less than 70%, optionally less than 66.1%, optionally less than 65%, optionally less than 60%, optionally less than 55%, optionally less than 50%, optionally less than 45%, optionally less than 40%, optionally less than 35%, optionally less than 30%, optionally less than 25%, optionally less than 20%, optionally less than 15%, optionally less than 10%.

Preferably, the water treatment sludge has a loss on ignition (LOI) of at least 66.1%.

Optionally, the water treatment sludge comprises aluminium.

Preferably, the water treatment sludge comprises aluminium.

Optionally, the water treatment sludge comprises at least 10%(w/w) aluminium. Further optionally, the water treatment sludge comprises at least 15%(w/w), optionally at least 20%(w/w), optionally at least 25%(w/w), optionally at least 30%(w/w), optionally at least 35%(w/w), optionally at least 40%(w/w), optionally at least 45%(w/w), optionally at least 50%(w/w), optionally at least 55%(w/w), optionally at least 60%(w/w), optionally at least 65%(w/w), optionally at least 70%(w/w), optionally at least 75%(w/w), optionally at least 80%(w/w), optionally at least 85%(w/w), optionally at least 90%(w/w) aluminium.

Preferably, the water treatment sludge comprises at least 10%(w/w) aluminium.

Optionally, the water treatment sludge comprises at least one of calcium oxide (CaO), potassium oxide (K2O), silicon dioxide (SiO2), iron(III) oxide (Fe2O3), aluminium(lll) oxide (Al2O3), magnesium oxide (MgO), manganese(II) oxide (MnO), titanium(IV) oxide (TiO2), sulfur trioxide (SO3), sodium oxide (Na2O), and phosphorus pentoxide (P2O5).

Optionally, the water treatment sludge comprises at least 0.50, optionally at least 0.75, optionally at least 1.00, optionally at least 1.25, optionally at least 1.50, optionally at least 1.75, optionally at least 2.00, optionally at least 2.25, optionally at least 2.50, optionally at least 2.75 optionally at least 3.00, optionally at least 3.19, optionally at least 3.25, optionally at least 3.50, optionally at least 3.75, optionally at least 4.00, optionally at least 4.25, optionally at least 4.50, optionally at least 4.75, optionally at least 5.00, optionally at least 5.25, optionally at least 5.50, optionally at least 5.75, optionally at least 6.00, optionally at least 6.25, optionally at least 6.50, optionally at least 6.75, optionally at least 7.00 % (w/w) silicon dioxide (SiO2).

Preferably, the water treatment sludge comprises at least 3.19 % (w/w) silicon dioxide (SiO2).

Optionally, the water treatment sludge comprises at least 20.0, optionally at least 20.5, optionally at least 21.0, optionally at least 21.5, optionally at least 22.0, optionally at least 22.5, optionally at least 23.0, optionally at least 23.5, optionally at least 24.0, optionally at least 24.5, optionally at least 25.0, optionally at least 25.5, optionally at least 26.0, optionally at least 26.5, optionally at least 27.0, optionally at least 27.5, optionally at least 28.0, optionally at least 28.3, optionally at least 28.5, optionally at least 29.0, optionally at least 29.5, optionally at least 30.0, optionally at least 30.5, optionally at least 31.0, optionally at least 31.5, optionally at least 32.0, optionally at least 32.5, optionally at least 33.0, optionally at least 33.5, optionally at least 34.0, optionally at least 34.5, optionally at least 35.0, optionally at least 35.5, optionally at least 36.0, optionally at least 36.5, optionally at least 37.0, optionally at least 37.5, optionally at least 38.0, optionally at least 38.3, optionally at least 38.5, optionally at least 39.0, optionally at least 39.5, optionally at least 40.0 % (w/w) aluminium(lll) oxide (Al2O3).

Preferably, the water treatment sludge comprises at least 28.3 % (w/w) aluminium(III) oxide (Al2O3).

Optionally, the water treatment sludge comprises at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20, optionally at least 0.21, optionally at least 0.22, optionally at least 0.23, optionally at least 0.24, optionally at least 0.25 % (w/w) calcium oxide (CaO).

Preferably, the water treatment sludge comprises at least 0.17 % (w/w) calcium oxide (CaO).

Optionally, the water treatment sludge comprises at least 0.50, optionally at least 0.60, optionally at least 0.70, optionally at least 0.80, optionally at least 0.90, optionally at least 1.00, optionally at least 1.03, optionally at least 1.10, optionally at least 1.20, optionally at least 1.30, optionally at least 1.40, optionally at least 1.50 % (w/w) iron(III) oxide (Fe2O3).

Preferably, the water treatment sludge comprises at least 1.03 % (w/w) iron(lll) oxide (Fe2O3).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % (w/w) potassium oxide (K2O).

Preferably, the water treatment sludge comprises at least 0.05 % (w/w) potassium oxide (K2O).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) magnesium oxide (MgO).

Preferably, the water treatment sludge comprises at least 0.09 % (w/w) magnesium oxide (MgO).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % titanium(IV) oxide (TiO2).

Preferably, the water treatment sludge comprises at least 0.03 % titanium(IV) oxide (TiO2).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) sulfur trioxide (SO3).

Preferably, the water treatment sludge comprises at least 0.10 % (w/w) sulfur trioxide (SO3).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % (w/w) manganese(II) oxide (MnO).

Preferably, the water treatment sludge comprises at least 0.04 % (w/w) manganese(II) oxide (MnO).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12 % (w/w) sodium oxide (Na2O).

Preferably, the water treatment sludge comprises at least 0.06 % (w/w) sodium oxide (Na2O).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16 % (w/w) phosphorus pentoxide (P2O5).

Preferably, the water treatment sludge comprises at least 0.08 % (w/w) phosphorus pentoxide (P2O5).

Optionally, the water treatment sludge has a particle size distribution of 70 - 170 micro(µ)meter. Further optionally, the water treatment sludge has a particle size distribution of 80 - 160, optionally 90 - 150, optionally 100 - 140, optionally 105 - 135, optionally 110 - 130, optionally 111 - 130, optionally 113 - 130, optionally 113 - 125, optionally 113 - 120, optionally 113 - 115 micro(µ)meter.

Optionally, the water treatment sludge has a mean particle size distribution (D50) of 70 - 170 micro(µ)meter.Further optionally, the water treatment sludge has a mean particle size distribution (D50) of 80 - 160, optionally 90 - 150, optionally 100 - 140, optionally 105 - 135, optionally 110 - 130, optionally 111 - 130, optionally 113 - 130, optionally 113 - 125, optionally 113 - 120, optionally 113 - 115 micro(µ)meter.

Preferably, the water treatment sludge has a mean particle size distribution (D50) of 111 - 113 micro(µ)meter.

Optionally, the water treatment sludge has a pH of 5.5-7.5, optionally a pH of 6.0-7.0, optionally a pH of 6.5.

Optionally, the water treatment sludge has a total solids content of 2000-4000, optionally 2500-3500, optionally 3000 mg/L.

Optionally, the water treatment sludge is an alum sludge.

Preferably, the water treatment sludge is an alum sludge.

Optionally, at least part of the water treatment sludge is amorphous. Further optionally, the water treatment sludge is amorphous.

Optionally, at least part of the water treatment sludge is crystalline.

Optionally, at least part of the water treatment sludge is amorphous and at least part of the water treatment sludge is crystalline.

Optionally, the slag is selected from ferrous slag, ferroalloy slag, and non-ferrous/base metal slag.

Preferably, the slag is ferrous slag.

Optionally, the slag is selected from blast furnace slag, air-cooled blast furnace slag, basic oxygen furnace slag, and electric arc furnace slag.

Preferably, the slag is blast furnace slag.

Preferably, the slag is blast furnace ferrous slag.

Optionally, the slag is obtained from at least one of the calcining, roasting, smelting, and refining of ore.

Preferably, the slag is obtained from the smelting of ore.

Optionally, the calcining, roasting, smelting, or refining of ore comprises the extraction of metal.

Preferably, the smelting of ore comprises the extraction of metal.

Optionally, the calcining, roasting, smelting, or refining of ore comprises cooling the slag.

Optionally, the calcining, roasting, smelting, or refining of ore comprises cooling the slag to a temperature of less than 1200 deg°C, optionally less than 1100 deg°C, optionally less than 1000 deg°C, optionally less than 900 deg°C, optionally less than 800 deg°C, optionally less than 700 deg°C, optionally less than 600 deg°C, optionally less than 500 deg°C, optionally less than 400 deg°C.

Preferably, the calcining, roasting, smelting, or refining of ore comprises cooling the slag to a temperature of less than 800 deg°C.

Optionally, cooling the slag comprises quenching the slag.

Optionally, cooling the slag comprises quenching the slag by contacting the slag with a fluid. Further optionally, cooling the slag comprises quenching the slag by contacting the slag with a liquid or a gas. Still further optionally, cooling the slag comprises quenching the slag by contacting the slag with a fluid selected from water, steam, and air.

Optionally, the ore is a metallurgical ore.

Optionally, the ore comprises at least one metal selected from iron, copper, lead, nickel, bauxite, zinc, chromium, tin, manganese, silver, and mercury, or carbonates, sulfides, or oxides each thereof.

Optionally, the slag is in dry form. Further optionally, the slag is in powder form. Still further optionally, the slag is in dry powder form.

Optionally, the slag is in ground form. Further optionally, the slag is granulated form. Still further optionally, the slag is in milled form.

Optionally, the slag is in ground granulated form.

Preferably, the slag is in ground granulated form.

Optionally, at least part of the slag is amorphous. Further optionally, the slag is amorphous.

Optionally, at least part of the slag is crystalline. Further optionally, the slag is crystalline.

Optionally, at least part of the slag is amorphous and at least part of the slag is crystalline.

Optionally, the slag comprises at least one of calcium oxide (CaO), potassium oxide (K2O), silicon dioxide (SiO2), iron(III) oxide (Fe2O3), aluminium(lll) oxide (Al2O3), magnesium oxide (MgO), manganese(II) oxide (MnO), titanium(IV) oxide (TiO2), sulfur trioxide (SO3), sodium oxide (Na2O), and phosphorus pentoxide (P2O5).

Optionally, the slag comprises at least one of calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), and sulfur trioxide (SO3).

Optionally, the slag comprises at least 10.0, optionally at least 15.0, optionally at least 20.0, optionally at least 25.0, optionally at least 29.80, optionally at least 30.0, optionally at least 35.0, optionally at least 36.5, optionally at least 40.0, optionally at least 45.0, optionally at least 50.0, optionally at least 55.0, optionally at least 60.0, optionally at least 65.0, optionally at least 70.0 % (w/w) silicon dioxide (SiO2).

Preferably, the slag comprises at least 36.5 % (w/w) silicon dioxide (SiO2).

Optionally, the slag comprises at least 4.09, optionally at least 5.0, optionally at least 6.0, optionally at least 7.0, optionally at least 8.0, optionally at least 9.0, optionally at least 10.0, optionally at least 10.4, optionally at least 11.0, optionally at least 12.0, optionally at least 13.0, optionally at least 14.0, optionally at least 15.0 % (w/w) aluminium(lll) oxide (Al2O3).

Preferably, the slag comprises at least 10.4 % (w/w) aluminium(III) oxide (Al2O3).

Optionally, the slag comprises at least 10.0, optionally at least 15.0, optionally at least 20.0, optionally at least 25.0, optionally at least 30.0, optionally at least 31.00, optionally at least 35.0, optionally at least 40.0, optionally at least 42.4, optionally at least 45.0, optionally at least 50.0, optionally at least 55.0, optionally at least 60.0, optionally at least 65.0, optionally at least 70.0, optionally at least 75.0, optionally at least 80.0 % (w/w) calcium oxide (CaO).

Preferably, the slag comprises at least 42.4 % (w/w) calcium oxide (CaO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 1.0, optionally at least 1.1, optionally at least 1.2, optionally at least 1.3, optionally at least 1.4, optionally at least 2.15 % (w/w) iron(III) oxide (Fe2O3).

Preferably, the slag comprises at least 0.7 % (w/w) iron(III) oxide (Fe2O3).

Optionally, the slag comprises at least 3.3, optionally at least 4.0, optionally at least 5.0, optionally at least 6.0, optionally at least 7.0, optionally at least 8.0, optionally at least 8.1, optionally at least 9.0, optionally at least 10.0, optionally at least 11.0, optionally at least 12.0 % (w/w) magnesium oxide (MgO).

Preferably, the slag comprises at least 8.1 % (w/w) magnesium oxide (MgO).

Optionally, the slag comprises at least 0.1, optionally at least 0.2, optionally at least 0.27, optionally at least 0.3, optionally at least 0.4, optionally at least 0.5, optionally at least 0.6, optionally at least 0.7, optionally at least 0.8, optionally at least 0.9, optionally at least 0.10 % (w/w) titanium(IV) oxide (TiO2).

Preferably, the slag comprises at least at least 0.5 % (w/w) titanium(IV) oxide (TiO2).

Optionally, the slag comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) sulfur trioxide (SO3).

Preferably, the slag comprises at least 0.1 % (w/w) sulfur trioxide (SO3).

Optionally, the slag comprises at least 0.1, optionally at least 0.2, optionally at least 0.3, optionally at least 0.37, optionally at least 0.4, optionally at least 0.5, optionally at least 0.6, optionally at least 0.7, optionally at least 0.8 % (w/w) manganese(II) oxide (MnO).

Preferably, the slag comprises at least 0.4 % (w/w) manganese(II) oxide (MnO).

Optionally, the slag has a particle size distribution of 5.00 - 15.00 micro(µ)meter.Further optionally, the slag has a particle size distribution of 6.00 - 14.00, optionally 7.00 - 13.00, optionally 8.00 - 12.00, optionally 9.00 - 12.00, optionally 10.00 - 12.00, optionally 11.00 - 12.00, optionally 11.50 - 12.00, optionally 11.67 - 12.00 micro(µ)meter.

Optionally, the slag has a mean particle size distribution (D50) of 5.00 - 15.00 micro(µ)meter. Further optionally, the slag has a mean particle size distribution (D50) of 6.00 - 14.00, optionally 7.00 - 13.00, optionally 8.00 - 12.00, optionally 9.00 - 12.00, optionally 10.00 - 12.00, optionally 11.00 - 12.00, optionally 11.50 - 12.00, optionally 11.67 - 12.00 micro(µ)meter.

Preferably, the slag has a mean particle size distribution (D50) of 11.67 micro(µ)meter.

Optionally, the binding composition comprises at least silicon dioxide (SiO2) and aluminium(lll) oxide (Al2O3).Further optionally, the binding composition comprises silicon dioxide (SiO2) and aluminium(lll) oxide (Al2O3).

Optionally, the binding composition comprises silicon dioxide (SiO2) and aluminium(lll) oxide (Al2O3) in a ratio of 1.0 - 4.0:1.0 (SiO2: Al2O3).

Optionally, the binding composition comprises silicon dioxide (SiO2) and aluminium(lll) oxide (Al2O3) in a ratio of 1.0 - 4.0:1.0, optionally 1.5 - 3.5:1.0, optionally 1.65 - 3.5:1.0, optionally 2.0 - 3.0:1.0, optionally 3.0:1.0, optionally 2.5:1.0 (SiO2: Al2O3).

Optionally, the binding composition comprises silicon dioxide (SiO2) and aluminium(lll) oxide (Al2O3) in a weight ratio of 1.0 - 4.0:1.0, optionally 1.5 - 3.5:1.0, optionally 1.65 - 3.5:1.0, optionally 2.0 - 3.0:1.0, optionally 3.0:1.0, optionally 2.5:1.0 (SiO2: Al2O3).

Optionally, the binding composition comprises silicon dioxide (SiO2) and aluminium(lll) oxide (Al2O3) in a molar ratio of 1.0 - 4.0:1.0, optionally 1.5 - 3.5:1.0, optionally 1.65 - 3.5:1.0, optionally 2.0 - 3.0:1.0, optionally 3.0:1.0, optionally 2.5:1.0 (SiO2: Al2O3).

Preferably, the binding composition comprises silicon dioxide (SiO2) and aluminium(lll) oxide (Al2O3) in a molar ratio of 2.0 - 2.5:1.0 (SiO2: Al2O3).

Optionally, the binding composition comprises at least sodium oxide (Na2O) and aluminium(lll) oxide (Al2O3).Further optionally, the binding composition comprises sodium oxide (Na2O) and aluminium(lll) oxide (Al2O3).

Optionally, the binding composition comprises sodium oxide (Na2O) and aluminium(lll) oxide (Al2O3) in a ratio of 0.25 - 2.0:1.00 (Na2O: Al2O3).

Optionally, the binding composition comprises sodium oxide (Na2O) and aluminium(lll) oxide (Al2O3) in a ratio of 0.43 - 1.75:1.00, optionally 0.5 - 1.75:1.00, optionally 0.70 - 1.75:1.00, optionally 0.70 - 1.70:1.00, optionally 0.70 - 1.60:1.00, optionally 0.70 - 1.50:1.00, optionally 0.70 - 1.40:1.00, optionally 0.70 - 1.36:1.00, optionally 0.70 - 1.30:1.00, optionally 0.70 - 1.20:1.00, optionally 0.70 - 1.10:1.00, optionally 0.70 - 1.00:1.00, optionally 0.75 - 1.00:1.00, optionally 0.80 - 1.00:1.00, optionally 0.90 - 1.00:1.00, optionally 1.00:1.00 (Na2O: Al2O3).

Optionally, the binding composition comprises sodium oxide (Na2O) and aluminium(lll) oxide (Al2O3) in a weight ratio of 0.43 - 1.75:1.00, optionally 0.5 - 1.75:1.00, optionally 0.70 - 1.75:1.00, optionally 0.70 - 1.70:1.00, optionally 0.70 - 1.60:1.00, optionally 0.70 - 1.50:1.00, optionally 0.70 - 1.40:1.00, optionally 0.70 - 1.36:1.00, optionally 0.70 - 1.30:1.00, optionally 0.70 - 1.20:1.00, optionally 0.70 - 1.10:1.00, optionally 0.70 - 1.00:1.00, optionally 0.75 - 1.00:1.00, optionally 0.80 - 1.00:1.00, optionally 0.90 - 1.00:1.00, optionally 1.00:1.00 (Na2O: Al2O3).

Optionally, the binding composition comprises sodium oxide (Na2O) and aluminium(lll) oxide (Al2O3) in a molar ratio of 0.43 - 1.75:1.00, optionally 0.5 - 1.75:1.00, optionally 0.70 - 1.75:1.00, optionally 0.70 - 1.70:1.00, optionally 0.70 - 1.60:1.00, optionally 0.70 - 1.50:1.00, optionally 0.70 - 1.40:1.00, optionally 0.70 - 1.36:1.00, optionally 0.70 - 1.30:1.00, optionally 0.70 - 1.20:1.00, optionally 0.70 - 1.10:1.00, optionally 0.70 - 1.00:1.00, optionally 0.75 - 1.00:1.00, optionally 0.80 - 1.00:1.00, optionally 0.90 - 1.00:1.00, optionally 1.00:1.00 (Na2O: Al2O3).

Preferably, the binding composition comprises sodium oxide (Na2O) and aluminium(lll) oxide (Al2O3) in a molar ratio of 0.70 - 1.30:1.00 (Na2O: Al2O3).

Further preferably, the binding composition comprises sodium oxide (Na2O) and aluminium(III) oxide (Al2O3) in a molar ratio of 1.00:1.00 (Na2O: Al2O3).

Optionally, the binding composition further comprises at least one activator.

Optionally, the binding composition comprises a water treatment sludge, slag, and at least one activator.

Optionally, the at least one activator is a carbonate or hydrates thereof.

Optionally, the at least one activator is sodium carbonate (Na2CO3) or hydrates thereof.

Optionally, the sodium carbonate (Na2CO3) or hydrates thereof is in dry form. Further optionally, the sodium carbonate (Na2CO3) or hydrates thereof is in powder form. Still further optionally, the sodium carbonate (Na2CO3) or hydrates thereof is in dry powder form.

Optionally, the at least one activator is a silicate.

Optionally, the at least one activator is a sodium silicate.

Optionally, the sodium silicate comprises silicon dioxide (SiO2) and sodium oxide (Na2O).

Optionally, the sodium silicate comprises silicon dioxide (SiO2) and sodium oxide (Na2O) in a ratio of 1.0 - 3.0:1.0 (SiO2:Na2O). Further optionally, the sodium silicate comprises silicon dioxide (SiO2) and sodium oxide (Na2O) in a ratio of 1.0:1.0 (SiO2:Na2O). Still further optionally, the sodium silicate comprises silicon dioxide (SiO2) and sodium oxide (Na2O) in a ratio of 2.0:1.0 (SiO2:Na2O). Still further optionally, the sodium silicate comprises silicon dioxide (SiO2) and sodium oxide (Na2O) in a ratio of 3.0:1.0 (SiO2:Na2O).

Optionally, the sodium silicate comprises silicon dioxide (SiO2) and sodium oxide (Na2O) in a weight ratio of 1.0 - 3.0:1.0 (SiO2:Na2O). Further optionally, the sodium silicate comprises silicon dioxide (SiO2) and sodium oxide (Na2O) in a weight ratio of 1.0:1.0 (SiO2:Na2O). Still further optionally, the sodium silicate comprises silicon dioxide (SiO2) and sodium oxide (Na2O) in a weight ratio of 2.0:1.0 (SiO2:Na2O). Still further optionally, the sodium silicate comprises silicon dioxide (SiO2) and sodium oxide (Na2O) in a weight ratio of 3.0:1.0 (SiO2:Na2O).

Optionally, the sodium silicate comprises silicon dioxide (SiO2) and sodium oxide (Na2O) in a molar ratio of 1.0 - 3.0:1.0 (SiO2:Na2O). Further optionally, the sodium silicate comprises silicon dioxide (SiO2) and sodium oxide (Na2O) in a molar ratio of 1.0:1.0 (SiO2:Na2O). Still further optionally, the sodium silicate comprises silicon dioxide (SiO2) and sodium oxide (Na2O) in a molar ratio of 2.0:1.0 (SiO2:Na2O). Still further optionally, the sodium silicate comprises silicon dioxide (SiO2) and sodium oxide (Na2O) in a molar ratio of 3.0:1.0 (SiO2:Na2O).

Optionally, the sodium silicate is a sodium silicate solution. Further optionally, the sodium silicate is an aqueous sodium silicate solution.

Optionally, the sodium silicate is in dry form. Further optionally, the sodium silicate is in powder form. Still further optionally, the sodium silicate is in dry powder form.

Optionally, the at least one activator is a neutral sodium silicate or an alkaline sodium silicate.

Optionally, the at least one activator is a sodium silicate selected from sodium metasilicate (Na2SiO3), sodium orthosilicate (Na4SiO4), and sodium pyrosilicate (Na6Si2O7).

Optionally, the at least one activator is a carbonate or hydrates thereof and a silicate.

Optionally, the at least one activator is a combination of the carbonate or hydrates thereof and the silicate.

Optionally, the at least one activator is a combination of a sodium carbonate (Na2CO3) or hydrates thereof and a sodium silicate.

Optionally, the binding composition further comprises the at least one activator in an amount of at least 1 % (w/w) relative to the mixture of a water treatment sludge and slag.

Further optionally, the binding composition further comprises the at least one activator in an amount of at least 1.0, optionally at least 2.1, optionally at least 5.0, optionally at least 7.5, optionally at least 8.0, optionally at least 8.7, optionally at least 10.9, optionally at least 15.0, optionally at least 15.7, optionally at least 19.6, optionally at least 20.0, optionally at least 22.6, optionally at least 23.6, optionally at least 23.9, optionally at least 25.0, optionally at least 26.0, optionally at least 27.3, optionally at least 27.5, optionally at least 30.0, optionally at least 30.6, optionally at least 31.5, optionally at least 32.0, optionally at least 32.1, optionally at least 35.0, optionally at least 35.7, optionally at least 36.1, optionally at least 40.0, optionally at least 40.7, optionally at least 41.0, optionally at least 43.9, optionally at least 45.0, optionally at least 45.6, optionally at least 50.0, optionally at least 51.9, optionally at least 52.1, optionally at least 54.6, optionally at least 55.0, optionally at least 56.0, optionally at least 58.1, optionally at least 60.0, optionally at least 64.3, optionally at least 65.0, optionally at least 67.6, optionally at least 70.0, optionally at least 75.0 % (w/w) relative to the mixture of a water treatment sludge and slag.

Still further optionally, the binding composition further comprises a silicate in an amount of at least 8.0, optionally at least 20.0, optionally at least 26.0, optionally at least 32.0 , optionally at least 36.1, optionally at least 40.7, optionally at least 41.0, optionally at least 54.6, optionally at least 56.0 % (w/w) relative to the mixture of a water treatment sludge and slag.

Still further optionally, the binding composition further comprises a carbonate or hydrates thereof in an amount of at least 2.1, optionally at least 7.5, optionally at least 8.7, optionally at least 10.9, optionally at least 15.7, optionally at least 19.6, optionally at least 22.6, optionally at least 23.6, optionally at least 23.9, optionally at least 27.3, optionally at least 31.5, optionally at least 32.1 % (w/w) relative to the mixture of a water treatment sludge and slag.

Still further optionally, the binding composition further comprises a silicate and a carbonate or hydrates thereof in a total amount of at least 5.0, optionally at least 15.0, optionally at least 20.0, optionally at least 25.0, optionally at least 27.3, optionally at least 27.5, optionally at least 30.0, optionally at least 30.6, optionally at least 35.0, optionally at least 35.7, optionally at least 40.0, optionally at least 43.9, optionally at least 45.0, optionally at least 45.6, optionally at least 50.0, optionally at least 51.9, optionally at least 52.1, optionally at least 54.6, optionally at least 55.0, optionally at least 58.1, optionally at least 60.0, optionally at least 64.3, optionally at least 65.0, optionally at least 67.6, optionally at least 70.0, optionally at least 75.0 % (w/w) relative to the mixture of a water treatment sludge and slag.

Optionally, the binding composition further comprises a silicate in an amount of at least 54.6 and carbonate or hydrates thereof in an amount of at least 0.0, optionally a silicate in an amount of at least 40.7 and carbonate or hydrates thereof in an amount of at least 23.6, optionally a silicate in an amount of at least 36.1 and carbonate or hydrates thereof in an amount of at least 31.5, optionally a silicate in an amount of at least 20.0 and carbonate or hydrates thereof in an amount of at least 0.0, optionally a silicate in an amount of at least 20.0 and carbonate or hydrates thereof in an amount of at least 7.5, optionally a silicate in an amount of at least 20.0 and carbonate or hydrates thereof in an amount of at least 15.7, optionally a silicate in an amount of at least 20.0 and carbonate or hydrates thereof in an amount of at least 23.9, optionally a silicate in an amount of at least 20.0 and carbonate or hydrates thereof in an amount of at least 32.1, optionally a silicate in an amount of at least 0.0 and carbonate or hydrates thereof in an amount of at least 27.33, optionally a silicate in an amount of at least 8.0 and carbonate or hydrates thereof in an amount of at least 22.6, optionally a silicate in an amount of at least 20.0 and carbonate or hydrates thereof in an amount of at least 15.7, optionally a silicate in an amount of at least 32.0 and carbonate or hydrates thereof in an amount of at least 8.7, optionally a silicate in an amount of at least 26.0 and carbonate or hydrates thereof in an amount of at least 19.6, optionally a silicate in an amount of at least 41.0 and carbonate or hydrates thereof in an amount of at least 10.9, optionally a silicate in an amount of at least 56.0 and carbonate or hydrates thereof in an amount of at least 2.1 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 54.6 and carbonate or hydrates thereof in an amount of at least 0.0 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 40.7 and carbonate or hydrates thereof in an amount of at least 23.6 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 36.1 and carbonate or hydrates thereof in an amount of at least 31.5 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 0.0 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 7.5 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 23.9 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 32.1 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 0.0 and carbonate or hydrates thereof in an amount of at least 27.33 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 8.0 and carbonate or hydrates thereof in an amount of at least 22.6 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag.

Optionally, the binding composition comprises a water treatment sludge and slag in a ratio of 20:80 (w/w, a water treatment sludge:slag) and further comprises a silicate in an amount of at least 32.0 and carbonate or hydrates thereof in an amount of at least 8.7 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 26.0 and carbonate or hydrates thereof in an amount of at least 19.6 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 41.0 and carbonate or hydrates thereof in an amount of at least 10.9 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 56.0 and carbonate or hydrates thereof in an amount of at least 2.1 % (w/w) relative to the mixture of a water treatment sludge and slag.

Optionally, the binding composition comprises a water treatment sludge and slag in a ratio of 30:70 (w/w, a water treatment sludge:slag) and further comprises a silicate in an amount of at least 54.6 and carbonate or hydrates thereof in an amount of at least 0.0 % (w/w) relative to the mixture of a water treatment sludge and slag, wherein the sodium silicate comprises silicon dioxide (SiO2) and sodium oxide (Na2O) in a molar ratio of 1.0:1.0 (SiO2:Na2O).

Optionally, the binding composition comprises a water treatment sludge and slag in a ratio of 30:70 (w/w, a water treatment sludge:slag) and further comprises a silicate in an amount of at least 40.7 and carbonate or hydrates thereof in an amount of at least 23.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 30:70 (w/w, a water treatment sludge:slag) and further comprises a silicate in an amount of at least 36.1 and carbonate or hydrates thereof in an amount of at least 31.5 % (w/w) relative to the mixture of a water treatment sludge and slag, wherein the sodium silicate comprises silicon dioxide (SiO2) and sodium oxide (Na2O) in a molar ratio of 3.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 0.0 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 7.5 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 23.9 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 32.1 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 0.0 and carbonate or hydrates thereof in an amount of at least 27.33 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 8.0 and carbonate or hydrates thereof in an amount of at least 22.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 20:80 (w/w, a water treatment sludge:slag) and further comprises a silicate in an amount of at least 32.0 and carbonate or hydrates thereof in an amount of at least 8.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 30:70 (w/w, a water treatment sludge:slag) and further comprises a silicate in an amount of at least 26.0 and carbonate or hydrates thereof in an amount of at least 19.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 30:70 (w/w, a water treatment sludge:slag) and further comprises a silicate in an amount of at least 41.0 and carbonate or hydrates thereof in an amount of at least 10.9 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition comprises a water treatment sludge and slag in a ratio of 30:70 (w/w, a water treatment sludge:slag) and further comprises a silicate in an amount of at least 56.0 and carbonate or hydrates thereof in an amount of at least 2.1 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O).

Optionally, the binding composition further comprises water.

Optionally, the binding composition further comprises water in a ratio to the mixture of a water treatment sludge and slag of at least 1:1 (w/w, water:a water treatment sludge+slag).

Further optionally, the binding composition further comprises water in a ratio to the mixture of a water treatment sludge and slag of at least 1:1, optionally at least 1:1.25, optionally at least 1:1.5, optionally at least 1:1.75, optionally at least 1:2, optionally at least 1:2.25, optionally at least 1:2.5, optionally at least 1:2.75, optionally at least 1:3, optionally at least 1:3.25, optionally at least 1:3.5, optionally at least 1:3.75, optionally at least 1:4, optionally at least 1:4.25, optionally at least 1:4.5, optionally at least 1:4.75, optionally at least 1:5 (w/w, water:a water treatment sludge+slag).

Still further optionally, the binding composition further comprises water in a ratio to the mixture of a water treatment sludge and slag of at least 1:1.25 or 1:2 (w/w, water:a water treatment sludge+slag).

Optionally, the binding composition further comprises water in a ratio to the binding composition of at least 1:1 (w/w, water:binding composition).

Further optionally, the binding composition further comprises water in a ratio to the binding composition of at least 1:1, optionally at least 1:1.25, optionally at least 1:1.5, optionally at least 1:1.75, optionally at least 1:2, optionally at least 1:2.25, optionally at least 1:2.5, optionally at least 1:2.75, optionally at least 1:3, optionally at least 1:3.25, optionally at least 1:3.5, optionally at least 1:3.75, optionally at least 1:4, optionally at least 1:4.25, optionally at least 1:4.5, optionally at least 1:4.75, optionally at least 1:5 (w/w, water:binding composition).

Still further optionally, the binding composition further comprises water in a ratio to the binding composition of at least 1:1.25 or 1:2 (w/w, water:binding composition).

Preferably, the binding composition further comprises water in a ratio to the binding composition of at least 1:2 (w/w, water:binding composition).

Optionally, the binding composition comprises a water treatment sludge and slag in a ratio of 30:70 (w/w, a water treatment sludge:slag) and further comprises a silicate in an amount of at least 54.6 and carbonate or hydrates thereof in an amount of at least 0.0 % (w/w) relative to the mixture of a water treatment sludge and slag, wherein the sodium silicate comprises silicon dioxide (SiO2) and sodium oxide (Na2O) in a molar ratio of 1.0:1.0 (SiO2:Na2O), wherein the binding composition further comprises water in a ratio to the binding composition of at least 1:1.25 (w/w, water:binding composition).

Optionally, the binding composition comprises a water treatment sludge and slag in a ratio of 30:70 (w/w, a water treatment sludge:slag) and further comprises a silicate in an amount of at least 40.7 and carbonate or hydrates thereof in an amount of at least 23.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 30:70 (w/w, a water treatment sludge:slag) and further comprises a silicate in an amount of at least 36.1 and carbonate or hydrates thereof in an amount of at least 31.5 % (w/w) relative to the mixture of a water treatment sludge and slag, wherein the sodium silicate comprises silicon dioxide (SiO2) and sodium oxide (Na2O) in a molar ratio of 3.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 0.0 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 7.5 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 23.9 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 32.1 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 0.0 and carbonate or hydrates thereof in an amount of at least 27.33 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 8.0 and carbonate or hydrates thereof in an amount of at least 22.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 20.0 and carbonate or hydrates thereof in an amount of at least 15.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 20:80 (w/w, a water treatment sludge:slag) and further comprises a silicate in an amount of at least 32.0 and carbonate or hydrates thereof in an amount of at least 8.7 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 30:70 (w/w, a water treatment sludge:slag) and further comprises a silicate in an amount of at least 26.0 and carbonate or hydrates thereof in an amount of at least 19.6 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 30:70 (w/w, a water treatment sludge:slag) and further comprises a silicate in an amount of at least 41.0 and carbonate or hydrates thereof in an amount of at least 10.9 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition comprises a water treatment sludge and slag in a ratio of 30:70 (w/w, a water treatment sludge:slag) and further comprises a silicate in an amount of at least 56.0 and carbonate or hydrates thereof in an amount of at least 2.1 % (w/w) relative to the mixture of a water treatment sludge and slag, wherein the sodium silicate comprises silicon dioxide (SiO2) and sodium oxide (Na2O) in a molar ratio of 2.0:1.0 (SiO2:Na2O), wherein the binding composition further comprises water in a ratio to the binding composition of at least 1:2 (w/w, water:binding composition).

Optionally, the binding composition further comprises at least one aggregate.

Optionally, the at least one aggregate is sand.

Optionally, the binding composition further comprises at least one aggregate in a ratio to the mixture of a water treatment sludge and slag of at least 1:3 (w/w, aggregate:a water treatment sludge+slag).

Further optionally, the binding composition further comprises at least one aggregate in a ratio to the mixture of a water treatment sludge and slag of at least 1:2 (w/w, aggregate:a water treatment sludge+slag), optionally at least 1:1 (w/w, aggregate:a water treatment sludge+slag), optionally at least 2:1 (w/w, aggregate:a water treatment sludge+slag), optionally at least 3:1 (w/w, aggregate:a water treatment sludge+slag), optionally at least 3.3:1 (w/w, aggregate:a water treatment sludge+slag).

Optionally, the binding composition further comprises at least one aggregate in a ratio to the binding composition of at least 1:3 (w/w, aggregate:binding composition).

Further optionally, the binding composition further comprises at least one aggregate in a ratio to the binding composition of at least 1:2 (w/w, aggregate: binding composition), optionally at least 1:1 (w/w, aggregate: binding composition), optionally at least 2:1 (w/w, aggregate: binding composition), optionally at least 3:1 (w/w, aggregate: binding composition), optionally at least 3.3:1 (w/w, aggregate: binding composition).

Preferably, the binding composition further comprises at least one aggregate in a ratio to the binding composition of at least 3.3:1 (w/w, aggregate:binding composition).

According to a second aspect of the present invention there is provided a method for preparing a binding composition, the method comprising:
(a) providing a water treatment sludge;
(b) providing slag; and
(c) admixing the water treatment sludge and slag to provide a mixture of a water treatment sludge and slag.

Optionally, the method comprises:
(a) providing a water treatment sludge;
(b) providing slag; and
(c) admixing the water treatment sludge and the slag to provide a mixture consisting essentially of the water treatment sludge and the slag.

Further optionally, the method comprises:
(a) providing a water treatment sludge;
(b) providing slag; and
(c) admixing the water treatment sludge and the slag to provide a mixture consisting of the water treatment sludge and the slag.

Optionally, the method consists essentially of:
(a) providing a water treatment sludge;
(b) providing slag; and
(c) admixing the water treatment sludge and the slag to provide a mixture consisting essentially of the water treatment sludge and the slag.

Further optionally, the method consists of:
(a) providing a water treatment sludge;
(b) providing slag; and
(c) admixing the water treatment sludge and the slag to provide a mixture consisting of the water treatment sludge and the slag.

Optionally, the admixing step comprises admixing the water treatment sludge and slag in a ratio of at least 10:90 (w/w, a water treatment sludge:slag).

Further optionally, the admixing step comprises admixing the water treatment sludge and slag in a ratio of at least 20:80 (w/w, a water treatment sludge:slag), optionally at least 30:70 (w/w, a water treatment sludge:slag), optionally at least 40:60 (w/w, a water treatment sludge:slag), optionally at least 50:50 (w/w, a water treatment sludge:slag), optionally at least 60:40 (w/w, a water treatment sludge:slag), optionally at least 70:30 (w/w, a water treatment sludge:slag), optionally at least 80:20 (w/w, a water treatment sludge:slag), optionally at least 90:10 (w/w, a water treatment sludge:slag).

Still further optionally, the admixing step comprises admixing the water treatment sludge and slag in a ratio of at least 20:80 (w/w, a water treatment sludge:slag), optionally at least 30:70 (w/w, a water treatment sludge:slag).

Optionally, the admixing step comprises admixing the water treatment sludge and slag in a ratio of between 10:90 (w/w, a water treatment sludge:slag) and 90:10 (w/w, a water treatment sludge:slag), optionally between 20:80 (w/w, a water treatment sludge:slag) and 80:20 (w/w, a water treatment sludge:slag), optionally between 30:70 (w/w, a water treatment sludge:slag) and 70:30 (w/w, a water treatment sludge:slag), optionally between 40:60 (w/w, a water treatment sludge:slag) and 60:40 (w/w, a water treatment sludge:slag).

Further optionally, the admixing step comprises admixing the water treatment sludge and slag in a ratio of between 20:80 (w/w, a water treatment sludge:slag) and 80:20 (w/w, a water treatment sludge:slag), optionally between 30:70 (w/w, a water treatment sludge:slag) and 70:30 (w/w, a water treatment sludge:slag).

Preferably, the admixing step comprises admixing the water treatment sludge and slag in a ratio of 20:80 or 30:70 (w/w, a water treatment sludge:slag).

Optionally, the providing a water treatment sludge step comprises calcining the water treatment sludge.

Optionally, the method comprises:
(a) providing a water treatment sludge;
(b) calcining the water treatment sludge;
(c) providing slag; and
(d) admixing the calcinated water treatment sludge and slag to provide a mixture of a water treatment sludge and slag.

Optionally, the providing a water treatment sludge step comprises heating the water treatment sludge to a temperature of at least 300 deg°C. Further optionally, the providing a water treatment sludge step comprises heating the water treatment sludge to a temperature of at least 400 deg°C, optionally at least 500 deg°C, optionally at least 600 deg°C, optionally at least 700 deg°C, optionally at least 800 deg°C, optionally at least 900 deg°C, optionally at least 1000 deg°C, optionally at least 1100 deg°C, optionally at least 1200 deg°C, optionally at least 1300 deg°C, optionally at least 1400 deg°C, optionally at least 1500 deg°C.

Preferably, the providing a water treatment sludge step comprises heating the water treatment sludge to a temperature of at least 500 deg°C.

Optionally or additionally, the providing a water treatment sludge step comprises heating the water treatment sludge for at least 30 minutes. Further optionally or additionally, the providing a water treatment sludge step comprises heating the water treatment sludge for at least 45 minutes, optionally at least 60 minutes, optionally at least 75 minutes, optionally at least 90 minutes, optionally at least 105 minutes, optionally at least 120 minutes, optionally at least 135 minutes, optionally at least 150 minutes, optionally at least 165 minutes, optionally at least 180 minutes, optionally at least 195 minutes, optionally at least 210 minutes, optionally at least 225 minutes, optionally at least 240 minutes.

Preferably, the providing a water treatment sludge step comprises heating the water treatment sludge for at least 180 minutes.

Optionally, the providing a water treatment sludge step comprises heating the water treatment sludge in a reducing atmosphere.

Optionally or additionally, the providing a water treatment sludge step comprises heating the water treatment sludge in the absence of oxygen. Further optionally or additionally, the providing a water treatment sludge step comprises heating the water treatment sludge in a reducing atmosphere in the absence of oxygen.

Optionally, the providing a water treatment sludge step further comprises drying the water treatment sludge. Further optionally, the providing a water treatment sludge step comprises reducing the particle size of the water treatment sludge.

Optionally, the method comprises:
(a) providing a water treatment sludge;
(b) reducing the particle size of the water treatment sludge;
(c) providing slag; and
(d) admixing the water treatment sludge and slag to provide a mixture of a water treatment sludge and slag.

Optionally, the providing a water treatment sludge step comprises grinding the water treatment sludge. Further optionally, the providing a water treatment sludge step comprises milling the water treatment sludge. Still further optionally, the providing a water treatment sludge step comprises ball milling the water treatment sludge.

Optionally, the providing a water treatment sludge step further comprises drying the water treatment sludge, and reducing the particle size of the water treatment sludge.

Optionally, the providing a water treatment sludge step further comprises drying the water treatment sludge, and reducing the particle size of the water treatment sludge for at least 5 minutes. Further optionally, the providing a water treatment sludge step further comprises drying the water treatment sludge, and grinding the dried a water treatment sludge for at least 5, optionally at least 10, optionally at least 15, optionally at least 30, optionally at least 45, optionally at least 60, optionally at least 75, optionally at least 90, optionally at least 105, optionally at least 120, optionally at least 135, optionally at least 150, optionally at least 165, optionally at least 180 minutes.

Preferably, the providing a water treatment sludge step further comprises drying the water treatment sludge, and reducing the particle size of the water treatment sludge for at least 120 mins.

Optionally, at least part of the water treatment sludge is amorphous. Further optionally, the water treatment sludge is amorphous.

Optionally, at least part of the water treatment sludge is crystalline. Further optionally, the water treatment sludge is crystalline.

Optionally, at least part of the water treatment sludge is amorphous and at least part of the water treatment sludge is crystalline.

Optionally, the water treatment sludge is a liquid suspension. Alternatively, the water treatment sludge is a solid.

Preferably, the water treatment sludge is a solid.

Optionally, the water treatment sludge is a solid having a water content of at least 5%(w/w). Further optionally, the water treatment sludge is a solid having a water content of at least 10%(w/w), optionally at least 15%(w/w), optionally at least 20%(w/w), optionally at least 25%(w/w), optionally at least 30%(w/w), optionally at least 35%(w/w), optionally at least 40%(w/w), optionally at least 45%(w/w), optionally at least 50%(w/w), optionally at least 55%(w/w), optionally at least 60%(w/w), optionally at least 65%(w/w), optionally at least 70%(w/w), optionally at least 75%(w/w), optionally at least 80%(w/w), optionally at least 82.5%(w/w), optionally at least 85%(w/w), optionally at least 90%(w/w), optionally at least 95%(w/w).

Preferably, the water treatment sludge is a solid having a water content of at least 82.5%(w/w).

Optionally, the water treatment sludge has a loss on ignition (LOI) of less than 90%. Optionally, the water treatment sludge has a loss on ignition (LOI) of less than 85%, optionally less than 80%, optionally less than 75%, optionally less than 70%, optionally less than 66.1%, optionally less than 65%, optionally less than 60%, optionally less than 55%, optionally less than 50%, optionally less than 45%, optionally less than 40%, optionally less than 35%, optionally less than 30%, optionally less than 25%, optionally less than 20%, optionally less than 15%, optionally less than 10%.

Preferably, the water treatment sludge has a loss on ignition (LOI) of at least 66.1%.

Optionally, the water treatment sludge comprises aluminium.

Preferably, the water treatment sludge comprises aluminium.

Optionally, the water treatment sludge comprises at least 10%(w/w) aluminium. Further optionally, the water treatment sludge comprises at least 15%(w/w), optionally at least 20%(w/w), optionally at least 25%(w/w), optionally at least 30%(w/w), optionally at least 35%(w/w), optionally at least 40%(w/w), optionally at least 45%(w/w), optionally at least 50%(w/w), optionally at least 55%(w/w), optionally at least 60%(w/w), optionally at least 65%(w/w), optionally at least 70%(w/w), optionally at least 75%(w/w), optionally at least 80%(w/w), optionally at least 85%(w/w), optionally at least 90%(w/w) aluminium.

Preferably, the water treatment sludge comprises at least 10%(w/w) aluminium.

Optionally, the water treatment sludge comprises at least one of calcium oxide (CaO), potassium oxide (K2O), silicon dioxide (SiO2), iron(III) oxide (Fe2O3), aluminium(lll) oxide (Al2O3), magnesium oxide (MgO), manganese(II) oxide (MnO), titanium(IV) oxide (TiO2), sulfur trioxide (SO3), sodium oxide (Na2O), and phosphorus pentoxide (P2O5).

Optionally, the water treatment sludge comprises at least 0.50, optionally at least 0.75, optionally at least 1.00, optionally at least 1.25, optionally at least 1.50, optionally at least 1.75, optionally at least 2.00, optionally at least 2.25, optionally at least 2.50, optionally at least 2.75 optionally at least 3.00, optionally at least 3.19, optionally at least 3.25, optionally at least 3.50, optionally at least 3.75, optionally at least 4.00, optionally at least 4.25, optionally at least 4.50, optionally at least 4.75, optionally at least 5.00, optionally at least 5.25, optionally at least 5.50, optionally at least 5.75, optionally at least 6.00, optionally at least 6.25, optionally at least 6.50, optionally at least 6.75, optionally at least 7.00 % (w/w) silicon dioxide (SiO2).

Preferably, the water treatment sludge comprises at least 3.19 % (w/w) silicon dioxide (SiO2).

Optionally, the water treatment sludge comprises at least 20.0, optionally at least 20.5, optionally at least 21.0, optionally at least 21.5, optionally at least 22.0, optionally at least 22.5, optionally at least 23.0, optionally at least 23.5, optionally at least 24.0, optionally at least 24.5, optionally at least 25.0, optionally at least 25.5, optionally at least 26.0, optionally at least 26.5, optionally at least 27.0, optionally at least 27.5, optionally at least 28.0, optionally at least 28.3, optionally at least 28.5, optionally at least 29.0, optionally at least 29.5, optionally at least 30.0, optionally at least 30.5, optionally at least 31.0, optionally at least 31.5, optionally at least 32.0, optionally at least 32.5, optionally at least 33.0, optionally at least 33.5, optionally at least 34.0, optionally at least 34.5, optionally at least 35.0, optionally at least 35.5, optionally at least 36.0, optionally at least 36.5, optionally at least 37.0, optionally at least 37.5, optionally at least 38.0, optionally at least 38.3, optionally at least 38.5, optionally at least 39.0, optionally at least 39.5, optionally at least 40.0 % (w/w) aluminium(lll) oxide (Al2O3).

Preferably, the water treatment sludge comprises at least 28.3 % (w/w) aluminium(III) oxide (Al2O3).

Optionally, the water treatment sludge comprises at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20, optionally at least 0.21, optionally at least 0.22, optionally at least 0.23, optionally at least 0.24, optionally at least 0.25 % (w/w) calcium oxide (CaO).

Preferably, the water treatment sludge comprises at least 0.17 % (w/w) calcium oxide (CaO).

Optionally, the water treatment sludge comprises at least 0.50, optionally at least 0.60, optionally at least 0.70, optionally at least 0.80, optionally at least 0.90, optionally at least 1.00, optionally at least 1.03, optionally at least 1.10, optionally at least 1.20, optionally at least 1.30, optionally at least 1.40, optionally at least 1.50 % (w/w) iron(III) oxide (Fe2O3).

Preferably, the water treatment sludge comprises at least 1.03 % (w/w) iron(lll) oxide (Fe2O3).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % (w/w) potassium oxide (K2O).

Preferably, the water treatment sludge comprises at least 0.05 % (w/w) potassium oxide (K2O).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) magnesium oxide (MgO).

Preferably, the water treatment sludge comprises at least 0.09 % (w/w) magnesium oxide (MgO).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % titanium(IV) oxide (TiO2).

Preferably, the water treatment sludge comprises at least 0.03 % titanium(IV) oxide (TiO2).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) sulfur trioxide (SO3).

Preferably, the water treatment sludge comprises at least 0.10 % (w/w) sulfur trioxide (SO3).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10 % (w/w) manganese(II) oxide (MnO).

Preferably, the water treatment sludge comprises at least 0.04 % (w/w) manganese(II) oxide (MnO).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12 % (w/w) sodium oxide (Na2O).

Preferably, the water treatment sludge comprises at least 0.06 % (w/w) sodium oxide (Na2O).

Optionally, the water treatment sludge comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16 % (w/w) phosphorus pentoxide (P2O5).

Preferably, the water treatment sludge comprises at least 0.08 % (w/w) phosphorus pentoxide (P2O5).

Optionally, the water treatment sludge has a particle size distribution of 70 - 170 micro(µ)meter. Further optionally, the water treatment sludge has a particle size distribution of 80 - 160, optionally 90 - 150, optionally 100 - 140, optionally 105 - 135, optionally 110 - 130, optionally 111 - 130, optionally 113 - 130, optionally 113 - 125, optionally 113 - 120, optionally 113 - 115 micro(µ)meter.

Optionally, the water treatment sludge has a mean particle size distribution (D50) of 70 - 170 micro(µ)meter.Further optionally, the water treatment sludge has a mean particle size distribution (D50) of 80 - 160, optionally 90 - 150, optionally 100 - 140, optionally 105 - 135, optionally 110 - 130, optionally 111 - 130, optionally 113 - 130, optionally 113 - 125, optionally 113 - 120, optionally 113 - 115 micro(µ)meter.

Preferably, the water treatment sludge has a mean particle size distribution (D50) of 111 - 113 micro(µ)meter.

Optionally, the water treatment sludge has a pH of 5.5-7.5, optionally a pH of 6.0-7.0, optionally a pH of 6.5.

Optionally, the water treatment sludge has a total solids content of 2000-4000, optionally 2500-3500, optionally 3000 mg/L.

Optionally, the water treatment sludge is an alum sludge.

Preferably, the water treatment sludge is an alum sludge.

Optionally, the slag is selected from ferrous slag, ferroalloy slag, and non-ferrous/base metal slag.

Preferably, the slag is ferrous slag.

Optionally, the slag is selected from blast furnace slag, air-cooled blast furnace slag, basic oxygen furnace slag, and electric arc furnace slag.

Preferably, the slag is blast furnace slag.

Preferably, the slag is blast furnace ferrous slag.

Optionally, the providing slag step comprises at least one of the calcining, roasting, smelting, and refining of ore.

Preferably, the providing slag step comprises the smelting of ore.

Optionally, the providing slag step comprises the extracting metal.

Preferably, the providing slag step comprises extracting metal.

Optionally, the providing slag step comprises cooling the slag.

Optionally, the providing slag step comprises cooling the slag to a temperature of less than 1200 deg°C, optionally less than 1100 deg°C, optionally less than 1000 deg°C, optionally less than 900 deg°C, optionally less than 800 deg°C, optionally less than 700 deg°C, optionally less than 600 deg°C, optionally less than 500 deg°C, optionally less than 400 deg°C.

Preferably, the providing slag step comprises cooling the slag to a temperature of less than 800 deg°C.

Optionally, cooling the slag comprises quenching the slag.

Optionally, cooling the slag comprises quenching the slag by contacting the slag with a fluid. Further optionally, cooling the slag comprises quenching the slag by contacting the slag with a liquid or a gas. Still further optionally, cooling the slag comprises quenching the slag by contacting the slag with a fluid selected from water, steam, and air.

Optionally, the ore is a metallurgical ore.

Optionally, the ore comprises at least one metal selected from iron, copper, lead, nickel, bauxite, zinc, chromium, tin, manganese, silver, and mercury, or carbonates, sulfides, or oxides each thereof.

Optionally, the providing slag step comprises drying the slag. Further optionally, the providing slag step comprises reducing the particle size of the slag.

Optionally, the providing slag step comprises grinding the slag. Further optionally, the providing slag step comprises granulating the slag. Still further optionally, the providing slag step comprises milling the slag.

Optionally, the providing slag step comprises grinding and granulating the slag.

Preferably, the providing slag step comprises grinding and granulating the slag.

Optionally, the providing slag step comprises grinding the water treatment sludge for at least 10 minutes.

Further optionally, the providing slag step comprises grinding the water treatment sludge for at least 20 minutes, optionally at least 30 minutes, optionally at least 40 minutes, optionally at least 50 minutes, optionally at least 60 minutes, optionally at least 70 minutes, optionally at least 80 minutes, optionally at least 90 minutes, optionally at least 100 minutes, optionally at least 110 minutes, optionally at least 120 minutes, optionally at least 130 minutes, optionally at least 140 minutes, optionally at least 150 minutes.

Preferably, the providing slag step comprises grinding the water treatment sludge for at least 120 minutes.

Optionally, at least part of the slag is amorphous. Further optionally, the slag is amorphous.

Optionally, at least part of the slag is crystalline. Further optionally, the slag is crystalline.

Optionally, at least part of the slag is amorphous and at least part of the slag is crystalline.

Optionally, the slag comprises at least one of calcium oxide (CaO), potassium oxide (K2O), silicon dioxide (SiO2), iron(III) oxide (Fe2O3), aluminium(lll) oxide (Al2O3), magnesium oxide (MgO), manganese(II) oxide (MnO), titanium(IV) oxide (TiO2), sulfur trioxide (SO3), sodium oxide (Na2O), and phosphorus pentoxide (P2O5).

Optionally, the slag comprises at least one of calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), and sulfur trioxide (SO3).

Optionally, the slag comprises at least 10.0, optionally at least 15.0, optionally at least 20.0, optionally at least 25.0, optionally at least 29.80, optionally at least 30.0, optionally at least 35.0, optionally at least 36.5, optionally at least 40.0, optionally at least 45.0, optionally at least 50.0, optionally at least 55.0, optionally at least 60.0, optionally at least 65.0, optionally at least 70.0 % (w/w) silicon dioxide (SiO2).

Preferably, the slag comprises at least 36.5 % (w/w) silicon dioxide (SiO2).

Optionally, the slag comprises at least 4.09, optionally at least 5.0, optionally at least 6.0, optionally at least 7.0, optionally at least 8.0, optionally at least 9.0, optionally at least 10.0, optionally at least 10.4, optionally at least 11.0, optionally at least 12.0, optionally at least 13.0, optionally at least 14.0, optionally at least 15.0 % (w/w) aluminium(lll) oxide (Al2O3).

Preferably, the slag comprises at least 10.4 % (w/w) aluminium(III) oxide (Al2O3).

Optionally, the slag comprises at least 10.0, optionally at least 15.0, optionally at least 20.0, optionally at least 25.0, optionally at least 30.0, optionally at least 31.00, optionally at least 35.0, optionally at least 40.0, optionally at least 42.4, optionally at least 45.0, optionally at least 50.0, optionally at least 55.0, optionally at least 60.0, optionally at least 65.0, optionally at least 70.0, optionally at least 75.0, optionally at least 80.0 % (w/w) calcium oxide (CaO).

Preferably, the slag comprises at least 42.4 % (w/w) calcium oxide (CaO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 1.0, optionally at least 1.1, optionally at least 1.2, optionally at least 1.3, optionally at least 1.4, optionally at least 2.15 % (w/w) iron(III) oxide (Fe2O3).

Preferably, the slag comprises at least 0.7 % (w/w) iron(III) oxide (Fe2O3).

Optionally, the slag comprises at least 3.3, optionally at least 4.0, optionally at least 5.0, optionally at least 6.0, optionally at least 7.0, optionally at least 8.0, optionally at least 8.1, optionally at least 9.0, optionally at least 10.0, optionally at least 11.0, optionally at least 12.0 % (w/w) magnesium oxide (MgO).

Preferably, the slag comprises at least 8.1 % (w/w) magnesium oxide (MgO).

Optionally, the slag comprises at least 0.1, optionally at least 0.2, optionally at least 0.27, optionally at least 0.3, optionally at least 0.4, optionally at least 0.5, optionally at least 0.6, optionally at least 0.7, optionally at least 0.8, optionally at least 0.9, optionally at least 0.10 % (w/w) titanium(IV) oxide (TiO2).

Preferably, the slag comprises at least at least 0.5 % (w/w) titanium(IV) oxide (TiO2).

Optionally, the slag comprises at least 0.01, optionally at least 0.02, optionally at least 0.03, optionally at least 0.04, optionally at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14, optionally at least 0.15, optionally at least 0.16, optionally at least 0.17, optionally at least 0.18, optionally at least 0.19, optionally at least 0.20 % (w/w) sulfur trioxide (SO3).

Preferably, the slag comprises at least 0.1 % (w/w) sulfur trioxide (SO3).

Optionally, the slag comprises at least 0.1, optionally at least 0.2, optionally at least 0.3, optionally at least 0.37, optionally at least 0.4, optionally at least 0.5, optionally at least 0.6, optionally at least 0.7, optionally at least 0.8 % (w/w) manganese(II) oxide (MnO).

Preferably, the slag comprises at least 0.4 % (w/w) manganese(II) oxide (MnO).

Optionally, the slag has a particle size distribution of 5.00 - 15.00 micro(µ)meter.Further optionally, the slag has a particle size distribution of 6.00 - 14.00, optionally 7.00 - 13.00, optionally 8.00 - 12.00, optionally 9.00 - 12.00, optionally 10.00 - 12.00, optionally 11.00 - 12.00, optionally 11.50 - 12.00, optionally 11.67 - 12.00 micro(µ)meter.

Optionally, the slag has a mean particle size distribution (D50) of 5.00 - 15.00 micro(µ)meter. Further optionally, the slag has a mean particle size distribution (D50) of 6.00 - 14.00, optionally 7.00 - 13.00, optionally 8.00 - 12.00, optionally 9.00 - 12.00, optionally 10.00 - 12.00, optionally 11.00 - 12.00, optionally 11.50 - 12.00, optionally 11.67 - 12.00 micro(µ)meter.

Preferably, the slag has a mean particle size distribution (D50) of 11.67 micro(µ)meter.

Optionally, the method further comprises admixing at least one activator. Further optionally, the method further comprises admixing at least one activator with the water treatment sludge and slag. Still further optionally, the method further comprises admixing at least one activator with the mixture of a water treatment sludge and slag.

Optionally, the method comprises:
(a) providing a water treatment sludge;
(b) providing slag; and
(c) admixing the water treatment sludge and slag to provide a mixture of a water treatment sludge and slag; and
(d) admixing at least one activator.

Optionally, the method comprises:
(a) providing at least one activator;
(b) providing a water treatment sludge;
(c) providing slag;
(d) admixing the at least one activator, water treatment sludge and slag to provide a mixture of a water treatment sludge and slag and at least one activator.

Optionally, the at least one activator is a carbonate or hydrates thereof.

Optionally, the at least one activator is sodium carbonate (Na2CO3) or hydrates thereof.

Optionally, the sodium carbonate (Na2CO3) or hydrates thereof is in dry form. Further optionally, the sodium carbonate (Na2CO3) or hydrates thereof is in powder form. Still further optionally, the sodium carbonate (Na2CO3) or hydrates thereof is in dry powder form.

Optionally, the at least one activator is a silicate.

Optionally, the at least one activator is a sodium silicate.

Optionally, the sodium silicate comprises silicon dioxide (SiO2) and sodium oxide (Na2O).

Optionally, the sodium silicate comprises silicon dioxide (SiO2) and sodium oxide (Na2O) in a ratio of 1.0 - 3.0:1.0 (SiO2:Na2O). Further optionally, the sodium silicate comprises silicon dioxide (SiO2) and sodium oxide (Na2O) in a ratio of 1.0:1.0 (SiO2:Na2O). Still further optionally, the sodium silicate comprises silicon dioxide (SiO2) and sodium oxide (Na2O) in a ratio of 2.0:1.0 (SiO2:Na2O). Still further optionally, the sodium silicate comprises silicon dioxide (SiO2) and sodium oxide (Na2O) in a ratio of 3.0:1.0 (SiO2:Na2O).

Optionally, the sodium silicate comprises silicon dioxide (SiO2) and sodium oxide (Na2O) in a weight ratio of 1.0 - 3.0:1.0 (SiO2:Na2O). Further optionally, the sodium silicate comprises silicon dioxide (SiO2) and sodium oxide (Na2O) in a weight ratio of 1.0:1.0 (SiO2:Na2O). Still further optionally, the sodium silicate comprises silicon dioxide (SiO2) and sodium oxide (Na2O) in a weight ratio of 2.0:1.0 (SiO2:Na2O). Still further optionally, the sodium silicate comprises silicon dioxide (SiO2) and sodium oxide (Na2O) in a weight ratio of 3.0:1.0 (SiO2:Na2O).

Optionally, the sodium silicate comprises silicon dioxide (SiO2) and sodium oxide (Na2O) in a molar ratio of 1.0 - 3.0:1.0 (SiO2:Na2O). Further optionally, the sodium silicate comprises silicon dioxide (SiO2) and sodium oxide (Na2O) in a molar ratio of 1.0:1.0 (SiO2:Na2O). Still further optionally, the sodium silicate comprises silicon dioxide (SiO2) and sodium oxide (Na2O) in a molar ratio of 2.0:1.0 (SiO2:Na2O). Still further optionally, the sodium silicate comprises silicon dioxide (SiO2) and sodium oxide (Na2O) in a molar ratio of 3.0:1.0 (SiO2:Na2O).

Optionally, the sodium silicate is a sodium silicate solution. Further optionally, the sodium silicate is an aqueous sodium silicate solution.

Optionally, the sodium silicate is in dry form. Further optionally, the sodium silicate is in powder form. Still further optionally, the sodium silicate is in dry powder form.

Optionally, the at least one activator is a neutral sodium silicate or an alkaline sodium silicate.

Optionally, the at least one activator is a sodium silicate selected from sodium metasilicate (Na2SiO3), sodium orthosilicate (Na4SiO4), and sodium pyrosilicate (Na6Si2O7).

Optionally, the at least one activator is a carbonate or hydrates thereof and a silicate.

Optionally, the at least one activator is a combination of the carbonate or hydrates thereof and the silicate.

Optionally, the at least one activator is a combination of a sodium carbonate (Na2CO3) or hydrates thereof and a sodium silicate.

Optionally, the method further comprises admixing at least one activator in an amount of at least 1 % (w/w) relative to the mixture of a water treatment sludge and slag.

Further optionally, the method further comprises admixing at least one activator in an amount of at least 1.0, optionally at least 2.1, optionally at least 5.0, optionally at least 7.5, optionally at least 8.0, optionally at least 8.7, optionally at least 10.9, optionally at least 15.0, optionally at least 15.7, optionally at least 19.6, optionally at least 20.0, optionally at least 22.6, optionally at least 23.6, optionally at least 23.9, optionally at least 25.0, optionally at least 26.0, optionally at least 27.3, optionally at least 27.5, optionally at least 30.0, optionally at least 30.6, optionally at least 31.5, optionally at least 32.0, optionally at least 32.1, optionally at least 35.0, optionally at least 35.7, optionally at least 36.1, optionally at least 40.0, optionally at least 40.7, optionally at least 41.0, optionally at least 43.9, optionally at least 45.0, optionally at least 45.6, optionally at least 50.0, optionally at least 51.9, optionally at least 52.1, optionally at least 54.6, optionally at least 55.0, optionally at least 56.0, optionally at least 58.1, optionally at least 60.0, optionally at least 64.3, optionally at least 65.0, optionally at least 67.6, optionally at least 70.0, optionally at least 75.0 % (w/w) relative to the mixture of a water treatment sludge and slag.

Still further optionally, the method further comprises admixing a silicate in an amount of at least 8.0, optionally at least 20.0, optionally at least 26.0, optionally at least 32.0 , optionally at least 36.1, optionally at least 40.7, optionally at least 41.0, optionally at least 54.6, optionally at least 56.0 % (w/w) relative to the mixture of a water treatment sludge and slag.

Still further optionally, the method further comprises admixing a carbonate or hydrates thereof in an amount of at least 2.1, optionally at least 7.5, optionally at least 8.7, optionally at least 10.9, optionally at least 15.7, optionally at least 19.6, optionally at least 22.6, optionally at least 23.6, optionally at least 23.9, optionally at least 27.3, optionally at least 31.5, optionally at least 32.1 % (w/w) relative to the mixture of a water treatment sludge and slag.

Still further optionally, the method further comprises admixing a silicate and a carbonate or hydrates thereof in a total amount of at least 5.0, optionally at least 15.0, optionally at least 20.0, optionally at least 25.0, optionally at least 27.3, optionally at least 27.5, optionally at least 30.0, optionally at least 30.6, optionally at least 35.0, optionally at least 35.7, optionally at least 40.0, optionally at least 43.9, optionally at least 45.0, optionally at least 45.6, optionally at least 50.0, optionally at least 51.9, optionally at least 52.1, optionally at least 54.6, optionally at least 55.0, optionally at least 58.1, optionally at least 60.0, optionally at least 64.3, optionally at least 65.0, optionally at least 67.6, optionally at least 70.0, optionally at least 75.0 % (w/w) relative to the mixture of a water treatment sludge and slag.

Optionally, the method further comprises admixing a silicate in an amount of at least 54.6 and carbonate or hydrates thereof in an amount of at least 0.0, optionally a silicate in an amount of at least 40.7 and carbonate or hydrates thereof in an amount of at least 23.6, optionally a silicate in an amount of at least 36.1 and carbonate or hydrates thereof in an amount of at least 31.5, optionally a silicate in an amount of at least 20.0 and carbonate or hydrates thereof in an amount of at least 0.0, optionally a silicate in an amount of at least 20.0 and carbonate or hydrates thereof in an amount of at least 7.5, optionally a silicate in an amount of at least 20.0 and carbonate or hydrates thereof in an amount of at least 15.7, optionally a silicate in an amount of at least 20.0 and carbonate or hydrates thereof in an amount of at least 23.9, optionally a silicate in an amount of at least 20.0 and carbonate or hydrates thereof in an amount of at least 32.1, optionally a silicate in an amount of at least 0.0 and carbonate or hydrates thereof in an amount of at least 27.33, optionally a silicate in an amount of at least 8.0 and carbonate or hydrates thereof in an amount of at least 22.6, optionally a silicate in an amount of at least 20.0 and carbonate or hydrates thereof in an amount of at least 15.7, optionally a silicate in an amount of at least 32.0 and carbonate or hydrates thereof in an amount of at least 8.7, optionally a silicate in an amount of at least 26.0 and carbonate or hydrates thereof in an amount of at least 19.6, optionally a silicate in an amount of at least 41.0 and carbonate or hydrates thereof in an amount of at least 10.9, optionally a silicate in an amount of at least 56.0 and carbonate or hydrates thereof in an amount of at least 2.1 % (w/w) relative to the mixture of a water treatment sludge and slag.

Optionally, the method further comprises admixing water. Further optionally, the method further comprises admixing water with the water treatment sludge and slag. Still further optionally, the method further comprises admixing water with the mixture of a water treatment sludge and slag.

Optionally, the method further comprises admixing water in a ratio to the mixture of a water treatment sludge and slag of at least 1:1 (w/w, water:a water treatment sludge+slag).

Further optionally, the method further comprises admixing water in a ratio to the mixture of a water treatment sludge and slag of at least 1:1, optionally at least 1:1.25, optionally at least 1:1.5, optionally at least 1:1.75, optionally at least 1:2, optionally at least 1:2.25, optionally at least 1:2.5, optionally at least 1:2.75, optionally at least 1:3, optionally at least 1:3.25, optionally at least 1:3.5, optionally at least 1:3.75, optionally at least 1:4, optionally at least 1:4.25, optionally at least 1:4.5, optionally at least 1:4.75, optionally at least 1:5 (w/w, water:a water treatment sludge+slag).

Still further optionally, the method further comprises admixing water in a ratio to the mixture of a water treatment sludge and slag of at least 1:1.25 or 1:2 (w/w, water:a water treatment sludge+slag).

Optionally, the method further comprises admixing water in a ratio to the binding composition of at least 1:1 (w/w, water:binding composition).

Further optionally, the method further comprises admixing water in a ratio to the binding composition of at least 1:1, optionally at least 1:1.25, optionally at least 1:1.5, optionally at least 1:1.75, optionally at least 1:2, optionally at least 1:2.25, optionally at least 1:2.5, optionally at least 1:2.75, optionally at least 1:3, optionally at least 1:3.25, optionally at least 1:3.5, optionally at least 1:3.75, optionally at least 1:4, optionally at least 1:4.25, optionally at least 1:4.5, optionally at least 1:4.75, optionally at least 1:5 (w/w, water:binding composition).

Still further optionally, the method further comprises admixing water in a ratio to the binding composition of at least 1:1.25 or 1:2 (w/w, water:binding composition).

Preferably, the method further comprises admixing water in a ratio to the binding composition of at least 1:2 (w/w, water:binding composition).

Optionally, the method further comprises admixing at least one aggregate. Further optionally, the method further comprises admixing at least one aggregate with the water treatment sludge and slag. Still further optionally, the method further comprises admixing at least one aggregate with the mixture of a water treatment sludge and slag.

Optionally, the at least one aggregate is sand.

Optionally, the method further comprises admixing at least one aggregate in a ratio to the mixture of a water treatment sludge and slag of at least 1:3 (w/w, aggregate:a water treatment sludge+slag).

Further optionally, the method further comprises admixing at least one aggregate in a ratio to the mixture of a water treatment sludge and slag of at least 1:2 (w/w, aggregate:a water treatment sludge+slag), optionally at least 1:1 (w/w, aggregate:a water treatment sludge+slag), optionally at least 2:1 (w/w, aggregate:a water treatment sludge+slag), optionally at least 3:1 (w/w, aggregate:a water treatment sludge+slag), optionally at least 3.3:1 (w/w, aggregate:a water treatment sludge+slag).

Optionally, the method further comprises admixing at least one aggregate in a ratio to the binding composition of at least 1:3 (w/w, aggregate:binding composition).

Further optionally, the method further comprises admixing at least one aggregate in a ratio to the binding composition of at least 1:2 (w/w, aggregate: binding composition), optionally at least 1:1 (w/w, aggregate: binding composition), optionally at least 2:1 (w/w, aggregate: binding composition), optionally at least 3:1 (w/w, aggregate: binding composition), optionally at least 3.3:1 (w/w, aggregate: binding composition).

Preferably, the method further comprises admixing at least one aggregate in a ratio to the binding composition of at least 3.3:1 (w/w, aggregate:binding composition).

Optionally, the admixing at least one aggregate step is conducted for at least 30 seconds.

Further optionally, the admixing at least one aggregate step is conducted for at least 30, optionally at least 60, optionally at least 120, optionally at least 180, optionally at least 240, optionally at least 300, optionally at least 360, optionally at least 420, optionally at least 480, optionally at least 540, optionally at least 600 seconds.

Preferably, the admixing at least one aggregate step is conducted for at least 600 seconds.

Optionally, the method comprises the additional step of curing the binding composition.

Optionally, the curing the binding composition step is conducted for at least 1 day.

Further optionally, the curing the binding composition step is conducted for at least 1, optionally at least 2, optionally at least 4, optionally at least 6, optionally at least 12, optionally at least 24, optionally at least 28, optionally at least 48 days.

Optionally, the curing the binding composition step is conducted for at least 28 days.

Optionally or additionally, the curing the binding composition step is conducted at a temperature of at least 16 deg°C.

Further optionally or additionally, the curing the binding composition step is conducted at a temperature of at least 16, optionally at least 17, optionally at least 18, optionally at least 19, optionally at least 20, optionally at least 21, optionally at least 22, optionally at least 23, optionally at least 24 deg°C.

According to a third aspect of the present invention there is provided an article comprising the binding composition according to the first aspect of the present invention or a binding composition obtained by the method according to the second aspect of the present invention.

Optionally, the article is a mortar, concrete, brick, tile, block, or other refractory material.

Optionally, the binding composition is a binder.

Optionally, the binding composition is a cement.

Optionally, the binding composition is a concrete.

### Brief description of the drawings

Embodiments of the present invention are described with reference to the appended non-limiting examples and the accompanying drawings in which:
**Figure 1** illustrates particle size distributions of raw AS, raw AS dried and ground for 2 hours to obtain a homogeneous powder (AS/800) and ground granulated blast furnace slag (GGBS);
**Figure 2** illustrates mineral compositions of raw AS and AS/800;

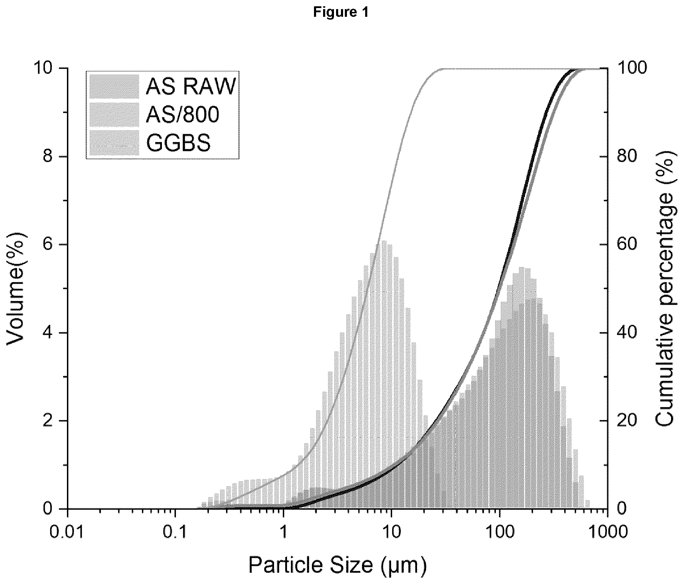

**Figure 1** illustrates Fourier transform infrared spectroscopy (FTIR) spectra of AS and AS/800.

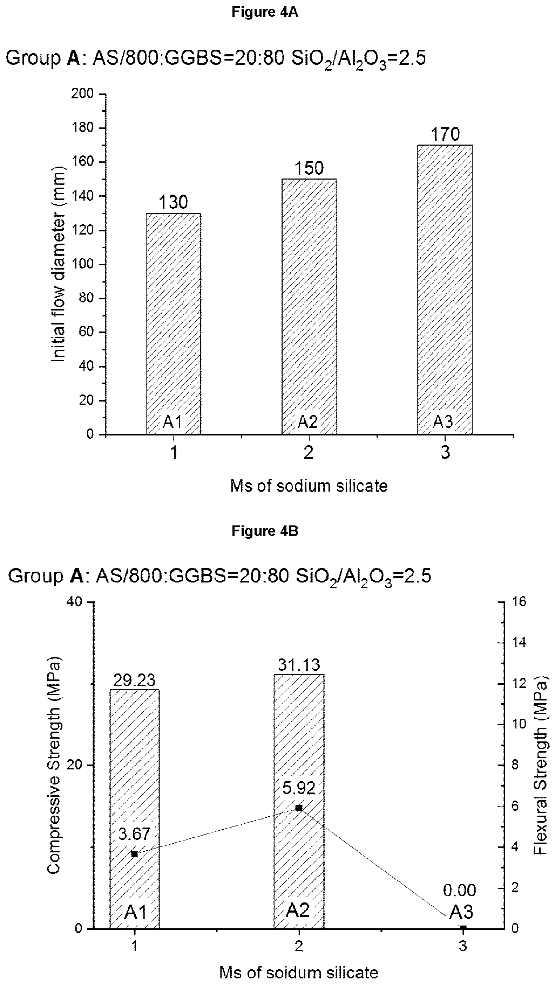

**Figure 4** illustrates properties of AS binding compositions activated with sodium silicate with varying Ms: (A) flowability, (B) mechanical strength;

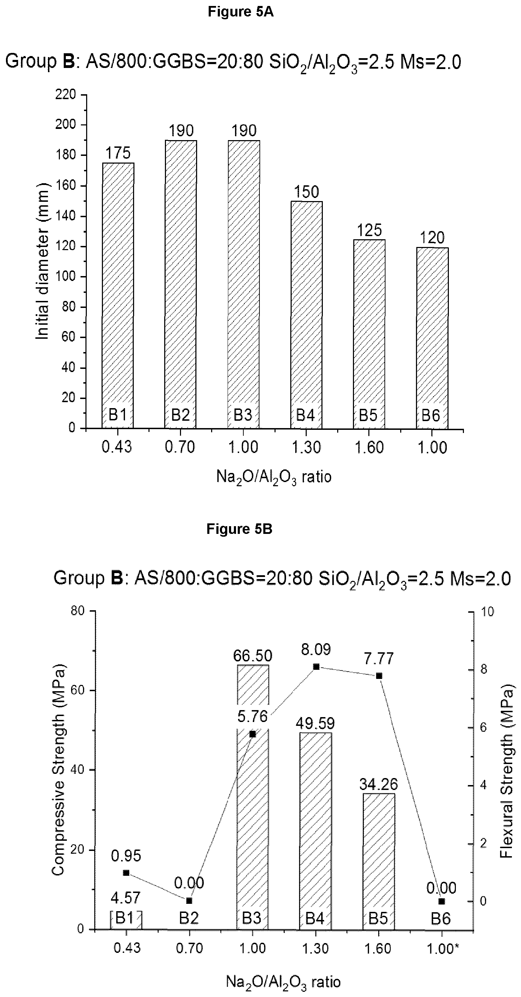

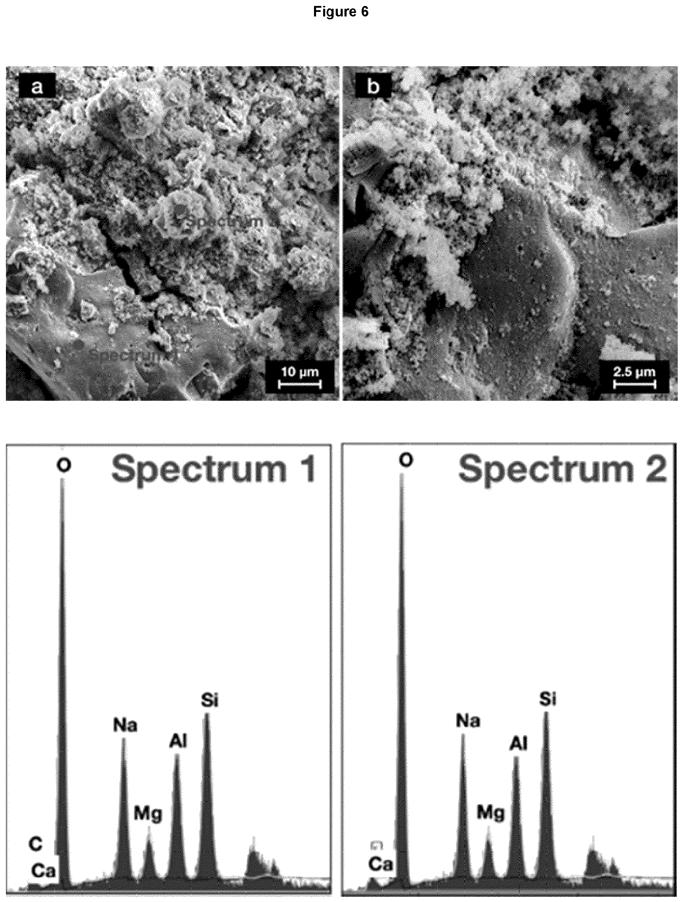

**Figure 5** illustrates properties of one-part AS binding compositions with varying Na2O/Al2O3: (A) flowability, (B) mechanical strength;

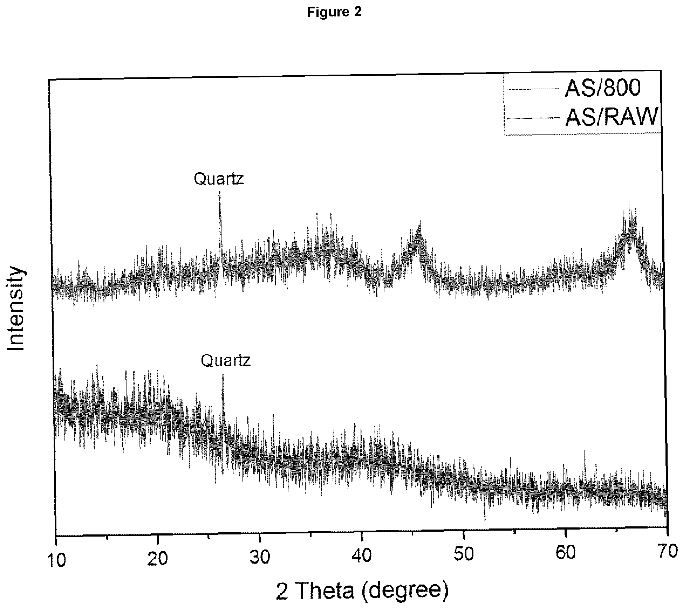

**Figure 2** illustrates scanning electron microscopy (SEM) micrographs and energy dispersive X-ray (EDX) analysis of specimen B1 (SiO₂/Al₂O₃=2.5, Na₂O/Al₂O₃=0.43);

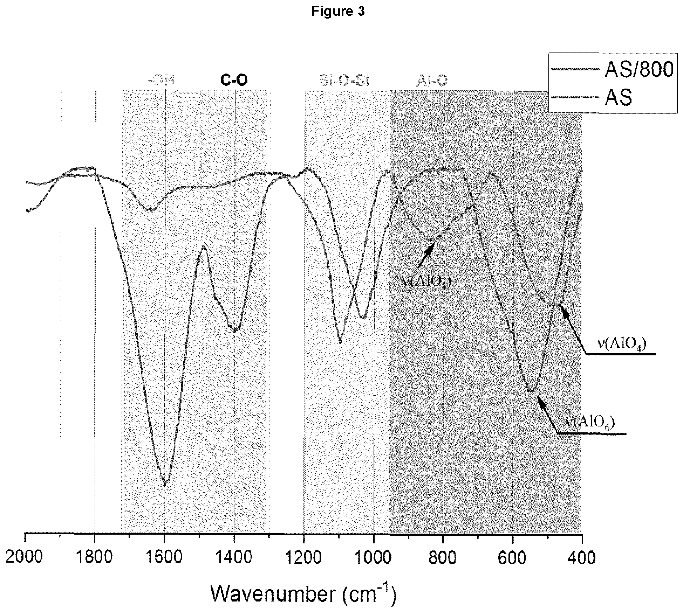

**Figure 3** illustrates SEM micrographs and EDX analysis of specimen B4 (SiO₂/Al₂O₃=2.5, Na₂O/Al₂O₃=1.3);

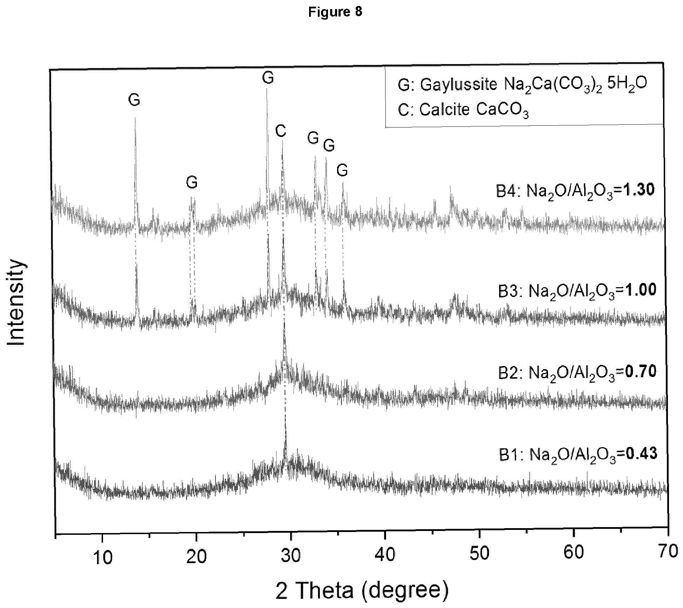

**Figure 8** illustrates mineral composition of specimens B1-B4 with different Na2O/Al2O3 ratios;

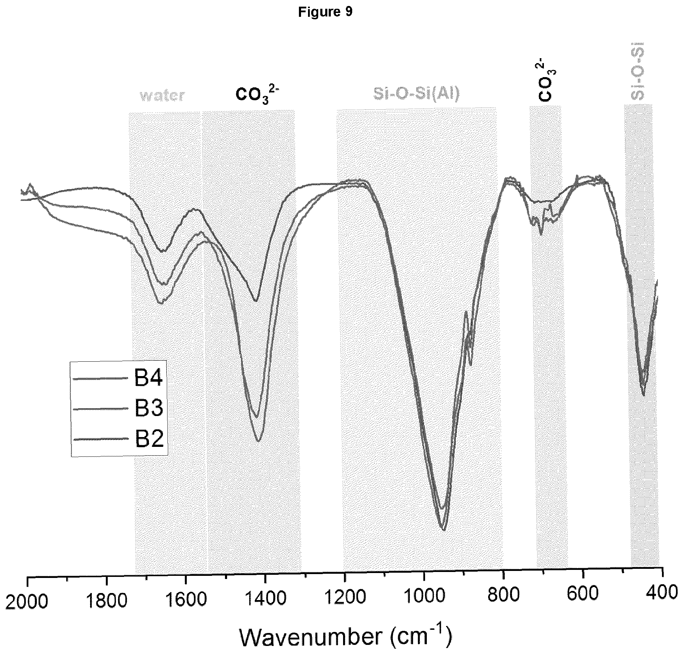

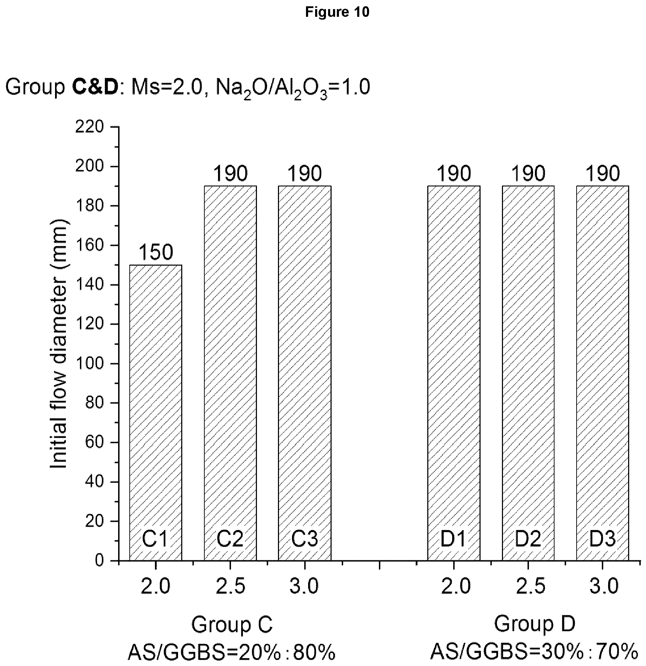

**Figure 9** illustrates FTIR spectra of one-part AS binding compositions (specimens B2-B4) with different Na2O/Al2O3 ratios;
**Figure 4** illustrates flowability of AS-based binding compositions with different SiO₂/Al₂O₃ ratios;

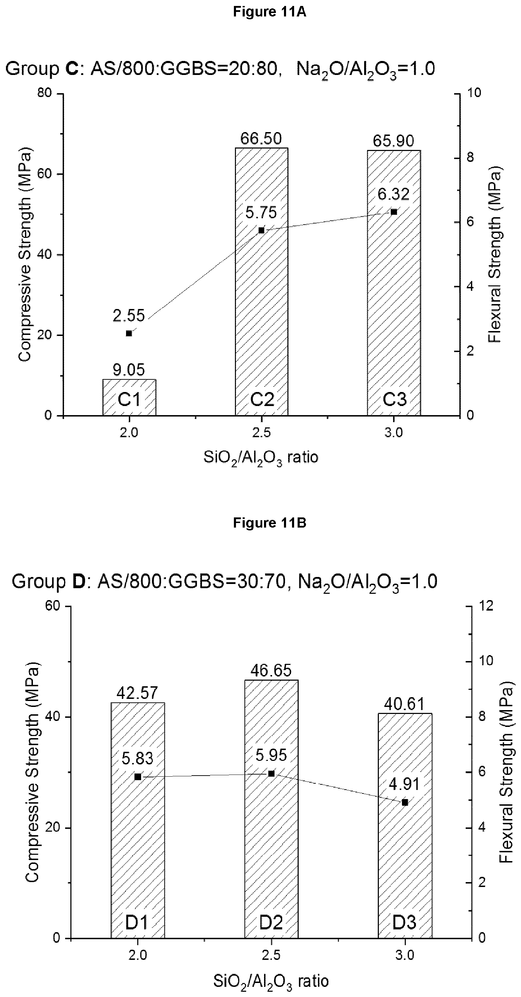

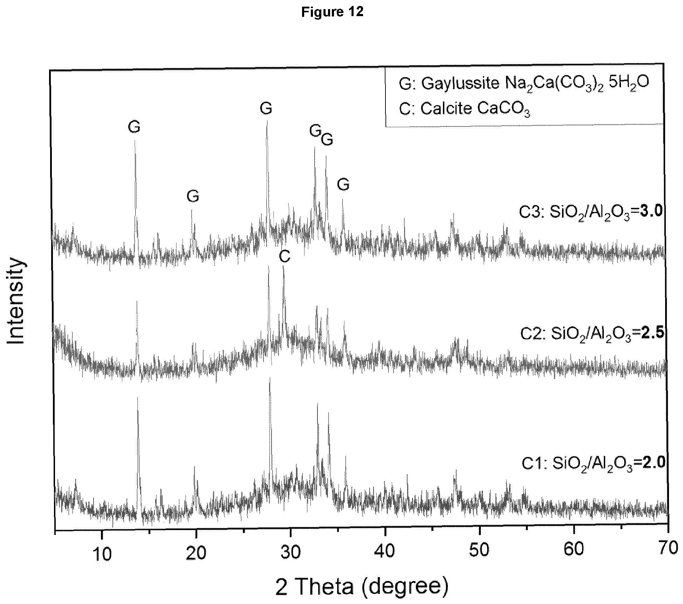

**Figure 11** illustrates mechanical strength of Group C (A) and D (B) at 28d;
**Figure 5** illustrates mineral composition of specimens C1-C3 with different SiO₂/Al₂O₃ ratios at 28d;

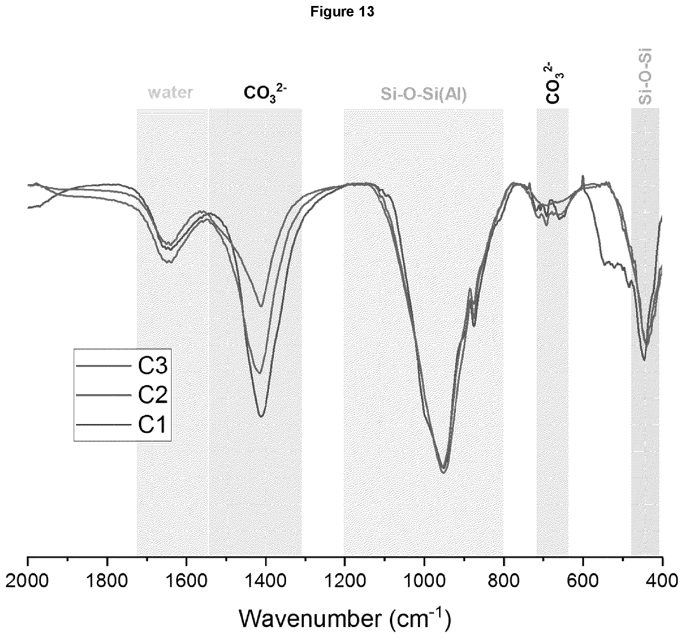

**Figure 13** illustrates FTIR spectra of specimens C1-C3 with different SiO2/Al2O3 ratios at 28d;

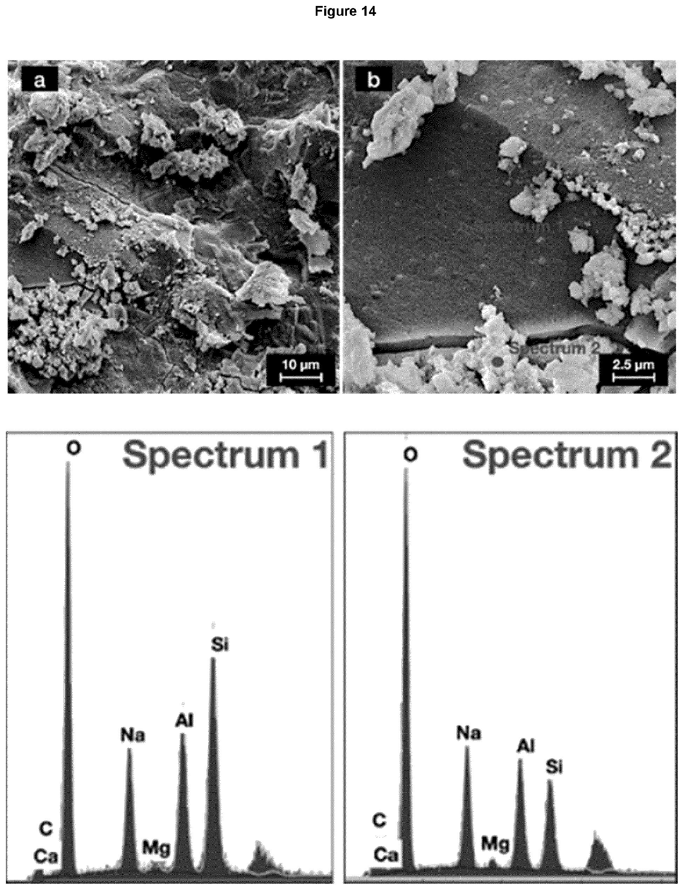

**Figure 14** illustrates SEM micrographs and EDX analysis of specimen C1 (SiO2/Al2O3=2.0, Na2O/Al2O3=1.0);

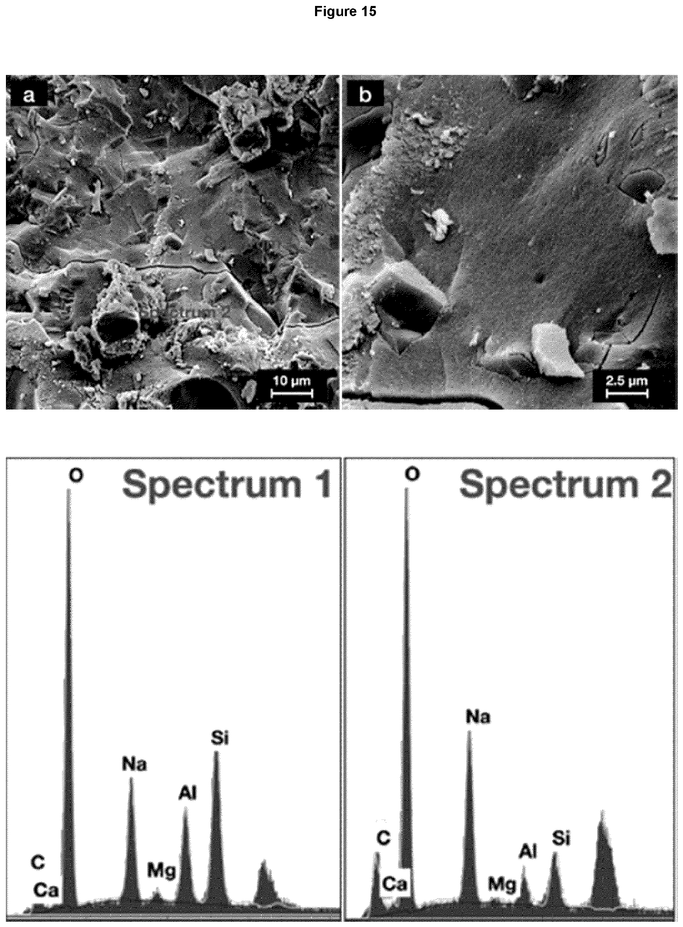

**Figure 15** illustrates SEM micrographs and EDX analysis of specimen C2 (SiO2/Al2O3=2.5, Na2O/Al2O3=1.0);

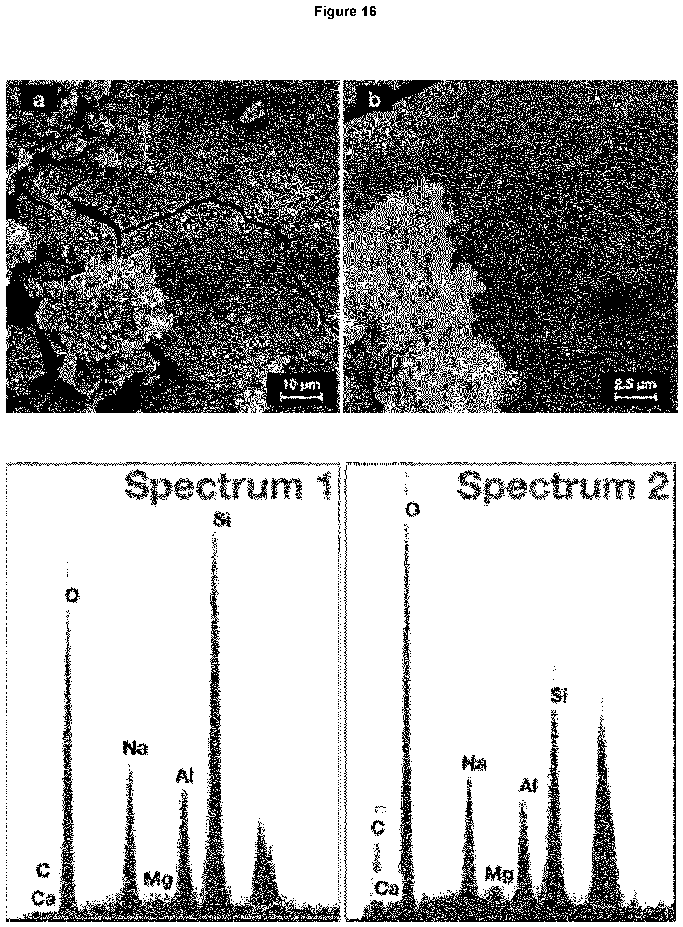

**Figure 16** illustrates SEM micrographs and EDX analysis of specimen C3 (SiO2/Al2O3=3.0, Na2O/Al2O3=1.0);

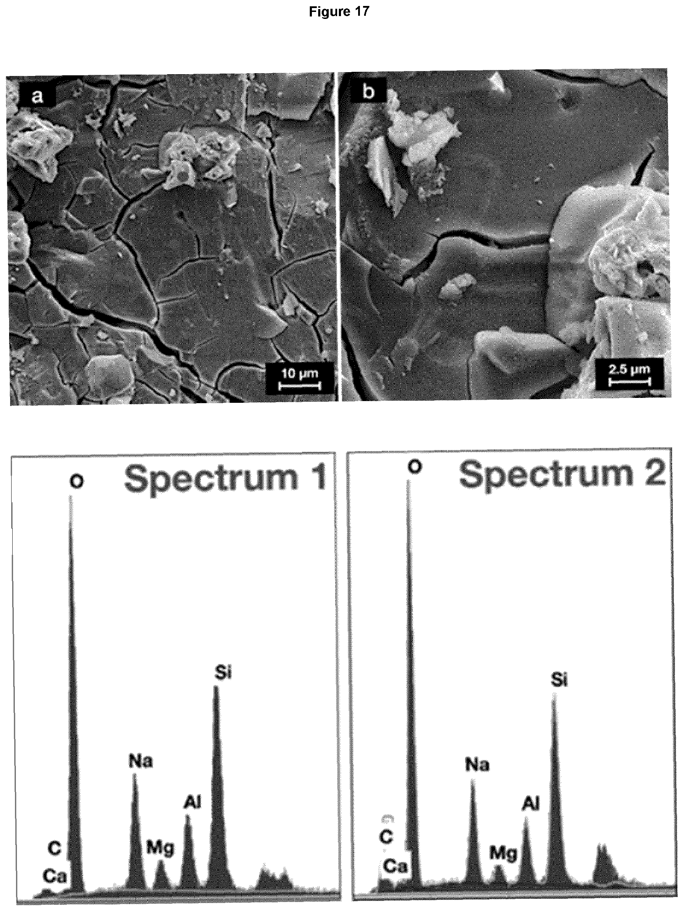

**Figure 17** illustrates SEM micrographs and EDX analysis of specimen D2 (SiO2/Al2O3=2.5, Na2O/Al2O3=1.0); and

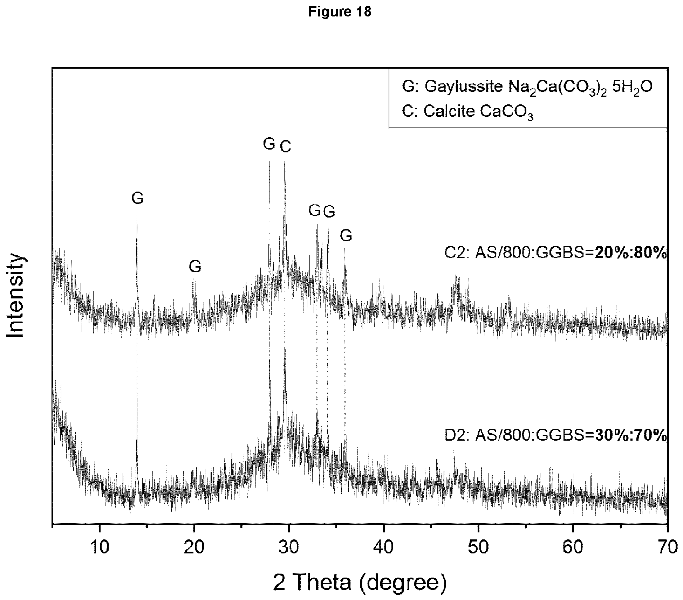

**Figure 18** illustrates mineral composition of specimens C2 and D2 with different AS/800 usage.

### Examples

### Example 1

### Materials

The AS was supplied by Northern Ireland Water. Raw AS was dried and ground for 2 hours to obtain a homogeneous powder, named AS/800. Based on previous work (Lei, Z., & Pavia, S. 2023. Reactivity of raw, pyroprocessed and GGBS-blended AS waste for sustainable cement production. *Journal of Building Engineering,* 65, 105787), AS was calcined at 800 deg°C to eliminate organic matter and modify reactivity. The chemical compositions of raw AS and GGBS used are given in Table 1. The particle size distributions of raw AS, AS/800 and GGBS are given in **Error! Reference source not found..** The average particle size D₅₀ measured by laser diffraction was 111 micro(µ)meter, 113 micro(µ)meter, and 11.67 micro(µ)meter for raw AS, AS/800 and GGBS, respectively. Figure 2 illustrates mineral compositions of raw AS and AS/800, wherein raw and 800 deg°C calcined AS were vastly amorphous besides only a peak of crystal quartz and wherein, after calcination, two humps centred at 46° 2θ and 67° 2θ were found, presumably short-range ordered incompletely crystallised γ-Al2O3.

**Table 1. Chemical compositions in wt% of raw materials obtained with XRF.**

| LOI | | | | | | | | | | | | |
|---|---|---|---|---|---|---|---|---|---|---|---|---|
| | SiO₂ | Al₂O₃ | CaO | Fe₂O₃ | K₂O | MgO | TiO₂ | SO₃ | MnO | Na₂O | P₂O₅ | % |
| AS/RAW | 3.19 | 28.3 | 0.17 | 1.03 | 0.05 | 0.09 | 0.03 | <0.10 | 0.04 | 0.06 | 0.08 | 66.1 |
| GGBS | 36.5 | 10.4 | 42.4 | 0.7 | - | 8.1 | 0.5 | 0.1 | 0.4 | - | - | - |

The FTIR of AS and AS/800 in Figure 1 further revealed microstructure. The absorption band located between 1500 cm⁻¹ and 1750 cm⁻¹ corresponds to surface hydroxyl groups from Al(OH)₃ and H₂O. The abundant -OH groups in the AS are attributed to its hydrophilic nature. This hydrophilicity poses challenges for dewatering AS and it is responsible for a high water demand when used in construction materials. Calcination dehydroxylates the AS significantly reducing its hydroxyl groups (AS/800). This reduction lowers the water demand of AS. The absorption band centred around ~1400 cm⁻¹, associated with C-O groups from organic matter and carbonates, disappears after calcination as the C evolves. The bands between ~900 cm⁻¹ and 1200 cm⁻¹, attributed to Si-O-Si groups, shift to higher wavenumbers due to calcination. This suggests potential crystallization of SiO₂. Furthermore, bands from 500 cm⁻¹ to 900 cm⁻¹ are associated with the stretching vibrations of Al-O bonds in AlO₆ octahedra and AlO₄ tetrahedra units. After calcination, a conversion tendency from 6-fold to 4-fold coordination of Al was noted, indicating dehydroxylation and structural turbulence within Al₂O₃ units due to high-temperature treatment.

Commercial sodium silicate anhydrous (NS) with various moduli (Ms= SiO₂:Na₂O by molar ratio) ranging from 1.0 to 3.0 and sodium carbonate anhydrous (NC, purity≥99.5%, laboratory reagent grade) were used as activators.

The mechanical performance including compressive and flexural strength at 28 day was measured with a loading machine following EN 196-3: 2016.

The mineral compositions of AS one-part binding compositions at 28 days were checked by X-ray diffraction (XRD) by powder methods.

The surface morphology and microstructure were characterized by SEM. The images were obtained by secondary electrons (SE) mode under the acceleration voltage at 10 kV. The specimens were coated with gold to avoid charging.

The functional groups of the binding compositions were analysed with FTIR. The analyses were carried out using a PerkinElmer Spectrum 100 FTIR apparatus equipped with an ATR accessory and a one-bounce diamond/KRS5 top plate. The spectra were acquired within the wavenumber range of 4000 to 400 cm⁻¹, employing a spectral resolution of 4 cm⁻¹, and an averaging of 32 scans for each measurement.

### Example 2

### Sample preparation

The mix design used is presented in Table 2. The mixes are designed and split into groups A to E so that each group explores a design variable. In group A, the influence of different moduli of sodium silicate on the performance of AS-based binding compositions was investigated. Group B examines the influence of Na₂O/Al₂O₃ ratios on the binding compositions performance by adjusting the sodium carbonate dosage. The design of groups C and D is based on the results of groups A and B. The groups investigate the effect of SiO₂/Al₂O₃ by adjusting the dosage of sodium silicate at varying AS content (of 20% and 30%).

**Table 2. Mix design of AS one-part binding compositions (g).**

| | Binder (g) | | | | | Sand (g) | Water (g) | w/b* | SiO₂/Al₂O₃ ** | Na₂O/Al₂O₃ +** |
|---|---|---|---|---|---|---|---|---|---|---|
| | AS/800 | GGBS | NS | Ms | NC | | | | | |
| A1 | 87.3 (30%) | 203.8 (70%) | 158.8 (54.6%) | **1.0** | 0.0 (0.0%) | 1500.0 | 320.0 | 0.8 | 2.5 | 1.36 |
| A2 | 82.2 (30%) | 191.7 (70%) | 111.5 (40.7%) | **2.0** | 64.6 (23.6%) | 1500.0 | 225.0 | 0.5 | 2.5 | 1.36 |
| A3 | 80.6 (30%) | 188.0 (70%) | 96.9 (36.1%) | **3.0** | 84.5 (31.5%) | 1500.0 | 225.0 | 0.5 | 2.5 | 1.36 |
| B1 | 75.0 (20%) | 300.0 (80%) | 75.0 (20%) | 2.0 | **0.0 (0.0%)** | 1500.0 | 225.0 | 0.5 | 2.5 | **0.43** |
| B2 | 70.6 (20%) | 282.4 (80%) | 70.6 (20%) | 2.0 | **26.4 (7.5%)** | 1500.0 | 225.0 | 0.5 | 2.5 | **0.70** |
| B3 | 66.3 (20%) | 265.3 (80%) | 66.3 (20%) | 2.0 | **52.0 (15.7%)** | 1500.0 | 225.0 | 0.5 | 2.5 | **1.00** |
| B4 | 62.5 (20%) | 250.2 (80%) | 62.5 (20%) | 2.0 | **74.7 (23.9%)** | 1500.0 | 225.0 | 0.5 | 2.5 | **1.30** |
| B5 | 59.2 (20%) | 236.7 (80%) | 59.2 (20%) | 2.0 | **94.9 (32.1%)** | 1500.0 | 225.0 | 0.5 | 2.5 | **1.60** |
| B6 | 70.7 (20%) | 282.7 (80%) | 0.0 (0.0%) | 2.0 | **96.6 (27.33%)** | 1500.0 | 225.0 | 0.5 | 1.65 | **1.00** |
| C1 | 68.9 (20%) | 275.7 (80%) | 27.6 **(8%)** | 2.0 | 77.8 **(22.6%)** | 1500.0 | 225.0 | 0.5 | **2.0** | 1.0 |
| C2 | 66.3 (20%) | 265.3 (80%) | 66.3 **(20%)** | 2.0 | 52.0 **(15.7%)** | 1500.0 | 225.0 | 0.5 | **2.5** | 1.0 |
| C3 | 64.0 (20%) | 255.9 (80%) | 102.3 (**32%)** | 2.0 | 27.8 **(8.7%)** | 1500.0 | 225.0 | 0.5 | **3.0** | 1.0 |
| D1 | 92.7 (30%) | 216.3 (70%) | 80.3 **(26%)** | 2.0 | 60.6 **(19.6%)** | 1500.0 | 225.0 | 0.5 | **2.0** | 1.0 |
| D2 | 88.9 (30%) | 207.4 (70%) | 121.5 **(41%)** | 2.0 | 32.3 **(10.9%)** | 1500.0 | 225.0 | 0.5 | **2.5** | 1.0 |
| D3 | 85.4 (30%) | 199.2 (70%) | 159.3 **(56%)** | 2.0 | 6.2 **(2.1%)** | 1500.0 | 225.0 | 0.5 | **3.0** | 1.0 |
| *: **water/binder ratio (w/b) = water/binder in weight** | | | | | | | | | | |
| **: **molar ratio, evaluated by chemical composition obtained by XRF in Table 1.** | | | | | | | | | | |

The preparation of AS one-part binding compositions consisted of: first, binder and sand were added to a mixer and mixed for two minutes; subsequently, all of the water was added. Considering that the dissolution of NC, and NS takes some time, the additional mixing time was extended to 10 minutes. Using partially fresh slurry tested according to EN 1015-3:2017, flowability is expressed as initial flow diameter. The residual slurry was cast into 40x40x160 mm steel moulds covered with polyethylene (PE) film to prevent water loss. After 24 hours, specimens were demoulded and cured at 20 ± 3 deg°C, under damp hessian to maintain humidity for 28 days. Pastes prepared in the same proportions but without sand were used to test the setting time according to EN 196-3 using the Vicat needle and for further microscopic characterization.

### Example 3

### Effect of varying moduli (Ms) on the performance of AS binding compositions

As can be seen from the results in **Error! Reference source not found.,** increasing the moduli raises workability but beyond the threshold of Ms=2.0, the binding compositions are unable to develop any strength. The lack of strength is because, at Ms=3, there is not sufficient alkalinity to dissolve AS and GGBS and polymerization fails to initiate. The modulus determines alkalinity, and industry grades having a ratio higher than 2.94 are considered neutral. On the contrary, high alkalinity, due to low Ms, triggers rapid dissolution of the Al phase, forming crystal phases such as calcium aluminate hydrates (C-A-H) which hinder flow.

Under the same SiO₂/Al₂O₃ and Na₂O/Al₂O₃ ratios, the specimens made with Ms=2.0 yield optimal mechanical performance in both compressive and flexural strength as shown in **Error! Reference source not found.(b).** The geopolymer activated with sodium silicate of Ms=1.0 has the lowest flowability, even when the w/b ratio was increased to 0.80 (Table 2). An exothermic reaction with heat evolution took place during mixing. This is typical of too sudden and overly high reactivities that can lead to flash set which impedes flow which agrees with the low flow measured.

### Example 4

### Effect of sodium carbonate activator on the performance of AS binding compositions

In group B, the main variable is the amount of Na₂CO₃ activator (NC) which determines the Na₂O/Al₂O₃. Specimen B1 was activated with sodium silicate (NS) only (hence having the lowest Na2O/Al2O3 = 0.43) while specimen B6 was solely activated with sodium carbonate therefore having the greatest SiO₂/Al₂O₃ of 1.65 (see Table 2). At constant SiO₂/Al₂O₃ (specimens B1-B5) the Na₂O/Al₂O₃ ratio is governed by the dosage of sodium carbonate.

The strength and workability of the resultant binding compositions are shown in **Error! Reference source not found..** The highest flowability is obtained when the Na2O/Al2O3 is between 0.7 and 1.0. Increasing Na₂O/Al₂O₃ significantly reduced workability. This is likely caused by an overly high NC content: although sodium carbonate is highly soluble in water, large quantities are difficult to fully dissolve during mixing.

The highest compressive strength of 66.5 MPa is achieved at Na₂O/Al₂O₃ = 1.00. Strength decreases when Na₂O/Al₂O₃ deviates from 1.0. The specimens activated solely with either sodium silicate (B1) or sodium carbonate (B6) yield poor mechanical performance indicating the important synergistic role of NC and NS in one-part repolymerization. NC plays a vital role in slag activation. The reaction mechanism of carbonate-activated slag is shown in Equation 1. The CO₃²⁻ from NC combined with the Ca²⁺ from GGBS promote dissolution and form carbonates such as calcite or gaylussite. Hydration of alkali-activated slag is determined by the action of the anion or anion group of the activator and the Ca²⁺ dissolved from the slag rather than by the initial pH of the activator.

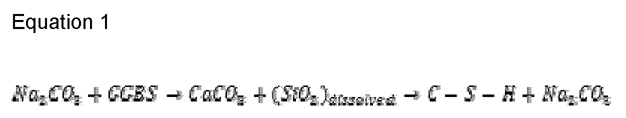

Similarly, soluble silicate is equally important in geopolymerisation, especially in the presence of large amounts of highly reactive aluminium (AS). Soluble silicate provides ample raw material for polymerisation to form C-A-S-H gels at the early stages of the reaction which enhance mechanical performance. However, an overly high silicate concentration can inhibit the rapid reaction between the active AS and the NC activator in the initial stage and form a calcium monocarboaluminate phase which causes a flash set.

When Na₂O/Al₂O₃ dropped below 1.0, the low alkalinity was not enough to trigger polymerization leading to low strength (B1 and B2).

The Al ions from the AS enter C-S-H by replacing Si on the tetrahedral sites. The charge imbalance caused by the replacement of Si⁴⁺ by Al³⁺ is balanced by the valence compensation of bound alkali metal ions, Na⁺ in this system. The results suggest that Na/Al = 1.0 is optimal and greater ratios lower strength and workability. Excessive Na⁺ in the binding composition matrix may precipitate as salt and cause problems such as loss of strength and efflorescence.

The structure and chemical composition of the amorphous matrix of Group B binding compositions are summarized in Figure 2 and Figure 3. Specimen B1 (with no NC) is not fully activated showing a heterogeneous, highly porous matrix where microcrystalline salts occasionally appear (see Figure 2). Increasing the NC activator densifies the binding composition matrix: the B4 specimen (Na₂O/Al₂O₃ = 1.30) displays a more compact and less porous matrix (see Figure 3). The magnified SEM photographs highlight the differences between the two matrices even more. The binding composition becomes denser, more homogenous and more vitreous, with fewer crystals. Hence, increasing NC improves the quality of the binding compositions.

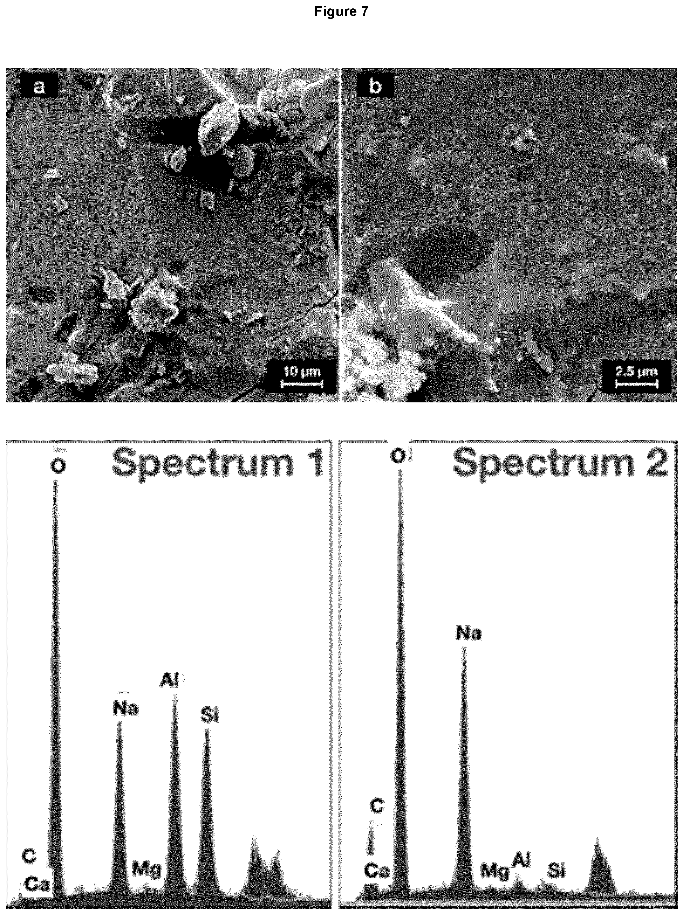

The EDX analyses show high Na and Al content in the C-S-H cement (see Figure 2 and 7). Hence, the abundant Al in the AS has replaced Si in the C-S-H, and Na from the activator has compensated the imbalance caused by the replacement. The EDX occasionally evidenced Na⁺ salts at the highest Na₂O/Al₂O₃ ratio of 1.3 (see Figure 3).

The mineralogical composition of the binding compositions, analyzed with XRD and included in **Error! Reference source not found.,** indicates that increasing NC promotes the formation of carbonates calcite and gaylussite (the latter at greater NC content); and that the carbonate content increases with the amount of NC in the binding composition. The mineralogical composition agrees with the reaction mechanism of carbonate-activated slag proposed in Equation 1 where calcite and gaylussite are the products of the reaction between the CO₃²⁻ from NC and the Ca²⁺ from GGBS.

The microstructure and cementing phases of the binding compositions in group B was further studied with FTIR. The results are shown in **Error! Reference source not found..** The main band located between 800 cm⁻¹ and 1200 cm⁻¹ was assigned to the anti-symmetric stretching vibration of Si-O-Si(Al) bands. The centre of the band at 952 cm⁻¹ indicates the dominance of SiQ² units and the broad band suggests a disordered structure with a wide distribution of SiQ³ to SiQ⁰ units. The band located between 1300 cm⁻¹ and 1550 cm⁻¹ is assigned to the anti-symmetric stretching mode of C-O in carbonate. The amount of carbonate increased with rising Na₂O/Al₂O₃ ratio agreeing with the results above.

### Example 5

### Effect of SiO₂/Al₂O₃ ratios on the AS binding compositions

The assessment of the binding compositions in groups A and B enables determination that the modulus of 2 (Ms = 2.0) and Na₂O/Al₂O₃ of 1.0 are optimal activator composition parameters for the AS binding compositions. In groups C and D, these remain constant and varying SiO₂/Al₂O₃ ratios are investigated. The flowability, indicated by the initial flow diameter, of Group C and D is presented in Figure 4. Except for specimen C1, workability is not influenced by the change of SiO₂/Al₂O₃ ratio. Specimen C1, with the lowest silicate (8%) and highest carbonate (22.6%) contents, has the lowest flow probably due to the quick reaction between the active AS and carbonate forming carbonate crystals that impede flow.

The mechanical strength of one-part AS binding compositions with different SiO₂/Al₂O₃ ratios are shown in **Error! Reference source not found..** Group D (AS/GGBS=30/70) has more AS and less slag than Group C (AS/GGBS=20/80). All the binding compositions attained high compressive strengths at 28d ranging from 40 to over 66 MPa, except for specimen C1 which reached 9 MPa. Similarly, flexural strengths are also significant ranging from 5 to over 6 MPa except for specimen C1 that reached 2.55 MPa. Irrespective of the %AS in the binding compositions, the ratio SiO₂/Al₂O₃ = 2.5 achieved the highest compressive strength and amongst the highest flexural strengths and increasing or reducing the ratio reduced compressive strength. In group C, dropping SiO₂/Al₂O₃ to 2.0, substantially decreased compressive strength from 66.50 MPa to 9.05 MPa, but raising SiO₂/Al₂O₃ to 3.0 only caused a slight reduction of 0.9%. However, in group D, deviating the SiO₂/Al₂O₃ ratio from 2.5 only led to small strength reductions of 8-13%.

Flexural strength roughly mirrors the compressive strength trend. In Group C, flexural strength increases with the SiO₂/Al₂O₃ ratio: by c.70% when the ratio increases from 2 to 2.5 but only by 9.91% when the ratio increased from 2.5 to 3.0. However, in Group D, varying the SiO₂/Al₂O₃ ratio did not strongly impact strength which consistently reached c.5-6 MPa.

In general, lower AS content enhanced mechanical strength (group C) but higher AS content (group D) improved the robustness of the binding compositions against variations in the SiO₂/Al₂O₃ ratio. At higher AS dosage, more NS activator is required to maintain the SiO₂/Al₂O₃ ratio which balances mechanical strength so that changes became more gradual and less dramatic. With less AS, the boundaries of the effectiveness of the binding composition system appeared to be narrower, as evidenced by the significant reduction in mechanical performance observed in C1.

### Example 6

### Microstructure of the optimized One-part AS binding composition (Ms = 2.0 and Na₂O/Al₂O₃ = 1.0)

In groups C/D, the NC and NS activator contents vary to reach SiO₂/Al₂O₃ values between 2 and 3. The mineral composition of group C specimens are shown in Figure 5. The primary crystalline phase is gaylussite (Na₂Ca(CO₃)₂, PDF #00-020-1085). Calcite (CaCO₃, PDF #04-008-0198) occurs in the specimen with SiO₂/Al₂O₃ at 2.5. Both carbonates result from the reaction between the Ca²⁺ ions dissolved from GGBS and the sodium carbonate activator.

In comparison to the other two groups, new characteristic peaks of calcite and less intensive peaks of gaylussite were found in the specimens with SiO₂/Al₂O₃ at 2.5 probably because more Na⁺ ions integrated into amorphous substances such as N-A-S-H gel, rather than precipitating as sodium salts.

The FTIR spectra of Group C are presented in **Error! Reference source not found..** Alteration of SiO₂/Al₂O₃ did not significantly change the microstructure of the AS-based binding composition as indicated by their similar FTIR spectra. The band between 800 cm⁻¹ and 1200 cm⁻¹ is the main absorption band in all specimens, which was assigned to the stretching vibration of Si-O-Si(Al). The band located from 1300 cm⁻¹ to 1550 cm⁻¹ was associated with the asymmetric stretching deformations vibration of the C-O bond of the carbonate. A clear pattern is that the amount of carbonates decreases with increasing SiO₂/Al₂O₃, however, the XRD results in Figure 5 show identical patterns for the lowest and the highest ratios. The presence of excess carbonates can adversely affect strength development and durability.

The surface morphology and chemical composition of the amorphous matrices in groups C and D are shown in **Error! Reference source not found.** to **Error! Reference source not found..** All specimens consist of dense amorphous matrices with scattered salts. No unreacted AS/800 and GGBS particles were found due to their high reactivity and fast dissolution rate. Cracks through the matrix were detected, and it seems that cracking is more pronounced in the high SiO₂/Al₂O₃ matrix. This is probably autogenous shrinkage cracking like in all binding compositions.

The high SiO₂/Al₂O₃ ratio indicates the presence of C-A-S-H and N-A-S-H gels. To differentiate their properties with analyses is difficult. In an alkali media, Ca-O bonds (464 kJ/mol) break first due to their lower dissociation energy followed by Al-O (512kJ/mol) and finally Si-O (798 kJ/mol). In the binding composition system, Ca²⁺ was first released into the solution and formed calcium salts calcite and gaylussite (see Figure 5) and Al species (Al(OH)₄⁻) followed.

In a Na₂O-SiO₂-Al₂O₃-H₂O system (N-A-S-H), the Al species polymerise but excessive Al content can form Na-Al-Si precipitates which worsen mechanical performance. However, in the CaO-SiO₂-Al₂O₃-H₂O system (C-A-S-H), the Al species do not directly form cementing gel but mainly replace tetrahedral Si in the C-S-H gel; and Na⁺ neutralises the charge imbalance caused by Al³⁺ substituting Si⁴⁺.

In cement chemistry, a suitable amount of Al ions form longer linear chains of C-(A)-S-H gel; and up to 15% Si can be replaced with Al. However, C-(A)-S-H gels in PC and alkali-activated slag systems have different compositions and microstructure. C-(A)-S-H formed from alkali-activated slag has higher Al content, higher Q³ units and longer chain length.

The morphology and chemical composition of group D geopolymer (see Error! Reference source not found.) shows an amorphous dense matrix. The Ca/(Si+Al), SiO₂/Al₂O₃ and Na₂O/Al₂O₃ ratios measured with EDX analysis are 0.42, 6.4 and 2.0 respectively. The ratios are higher than in group C (specimen C2). In C2, the AS: NC was 1:1 by weight, while in D2, the ratio was increased to 3:4 to maintain the SiO₂/Al₂O₃ in the design. More reactive Al and soluble silicate in the initial reaction system facilitated polymerization. However, this may have also produced more cracks, as illustrated in **Error! Reference source not found..** The mineral composition of D2 is similar to group C, with gaylussite and calcite as the main crystalline phases (see **Error! Reference source not found.).**

AS, as a by-product of drinking water treatment, poses a challenge for recovery in construction materials due to its high aluminium and organic content. The present invention provides an innovative method to recycle AS using a one-part geopolymerisation technique. AS calcined at 800 deg°C was mixed with ground granulated blast furnace slag (GGBS) and activated by sodium silicate and sodium carbonate to produce a one-part binding composition. The examples demonstrate the effects of the moduli of silicate activator, Na2O/Al2O3 and SiO₂/Al₂O₃ ratios to optimise the mechanical performance of the AS-based binding composition. The optimal parameters for geopolymerisation were found to be a silicate modulus of 2.0, Na2O/Al2O3 ratio of 1.0, and SiO2/Al2O3 ratio of 2.5. The examples also demonstrate the effects of replacing 20% and 30% of GGBS with AS. Increasing AS usage lowered mechanical performance but enhanced the robustness of the binding composition system, meaning the mechanical strength became less sensitive to parameter variations. Sodium silicate and sodium carbonate demonstrated both irreplaceable and synergistic effects on the geopolymerisation process. Sodium carbonate facilitated the dissolution of GGBS, while sodium silicate provided soluble silicate necessary for geopolymerisation. When properly designed, the AS binding compositions exhibited a dense and compacted matrix. The main crystalline phases identified were gaylussite and calcite, along with a distinct amorphous content comprising C-A-S-H and N-A-S-H gels.

The present invention provides a viable and innovative method to recycle AS into construction materials for waste management and valorization. The examples suggest that an excellently performing, one-part binding compositions can be produced based on calcined AS and GGBS, activated by sodium silicate and sodium carbonate. The examples demonstrate:
- sodium silicate with a modulus of 2.0 was the most suitable activator for the AS-GGBS binding composition, wherein a higher modulus of silicate led to low alkalinity, inhibiting geopolymerization, while a lower modulus caused excessive alkalinity, resulting in rapid setting;
- the optimal Na₂O/Al₂O₃ ratio for the binding compositions was 1.0, and deviations from this value decreased the strength of binding compositions, wherein sodium ions balance the charge deficit due to the substitution of Al³⁺ for Si⁴⁺, and excess sodium led to the formation of excessive salt phases, adversely affecting structural integrity and homogeneity;
- the presence of sodium carbonate was vital for the AS-GGBS binding composition, wherein carbonate triggered the dissolution of GGBS, initiating geopolymerization in the one-part system, wherein sodium silicate had an irreplaceable and synergistic effect with sodium carbonate, providing soluble silicate necessary for geopolymerization to form more cementing gels and inhibiting the rapid reaction of activated alumina with carbonates;
- a SiO₂/Al₂O₃ ratio of 2.5 was found optimal for the AS-GGBS binding composition, wherein increasing the SiO₂ content beyond this ratio did not improve mechanical performance; and higher AS replacement decreased mechanical strength but increased the robustness of the binding composition system, requiring more activators to balance the SiO₂/Al₂O₃ ratio; and
- a dense and compact matrix was found in the properly designed binding composition, wherein gaylussite and calcite were identified as the main crystalline phases, and rich Si-O-Si(Al) bonds detected in FTIR spectra suggested the presence of C(N)-A-S-H gels, such that modifying the design parameters did not alter the microstructure of the resulting binding composition, as indicated by FTIR and XRD, whereas SEM observations revealed a significant amount of salt phases, which may adversely affect mechanical performance.

## Claims

1. A binding composition comprising a water treatment sludge and slag in a ratio of at least 10:90 (w/w, water treatment sludge:slag).

2. A binding composition according to claim 1, wherein the binding composition comprises a water treatment sludge and slag in a ratio of 20:80 (w/w, water treatment sludge:slag).

3. A binding composition according to claim 1, wherein the binding composition comprises a water treatment sludge and slag in a ratio of 30:70 (w/w, water treatment sludge:slag).

4. A binding composition according to any one of claims 1-3, wherein the water treatment sludge comprises at least 3.19 % (w/w) silicon dioxide (SiO2), at least 28.3 % (w/w) aluminium(III) oxide (Al2O3), at least 0.17 % (w/w) calcium oxide (CaO), at least 1.03 % (w/w) iron(III) oxide (Fe2O3), at least 0.05 % (w/w) potassium oxide (K2O), at least 0.09 % (w/w) magnesium oxide (MgO), at least 0.03 % titanium(IV) oxide (TiO2), at least 0.10 % (w/w) sulfur trioxide (SO3), at least 0.04 % (w/w) manganese(II) oxide (MnO), at least 0.06 % (w/w) sodium oxide (Na2O), and at least 0.08 % (w/w) phosphorus pentoxide (P2O5).

5. A binding composition according to any one of claims 1-4, wherein the slag comprises at least 36.5 % (w/w) silicon dioxide (SiO2), at least 10.4 % (w/w) aluminium(lll) oxide (Al2O3), at least 42.4 % (w/w) calcium oxide (CaO), at least 0.7 % (w/w) iron(III) oxide (Fe2O3), at least 8.1 % (w/w) magnesium oxide (MgO), at least at least 0.5 % (w/w) titanium(IV) oxide (TiO2), at least 0.1 % (w/w) sulfur trioxide (SO3), and at least 0.4 % (w/w) manganese(II) oxide (MnO).

6. A binding composition according to any one of claims 1-5, wherein the binding composition further comprises at least one activator.

7. A binding composition according to claim 6, wherein the at least one activator is a combination of a carbonate or hydrates thereof and a silicate.

8. A binding composition according to claim 6 or 7, wherein the at least one activator comprises sodium carbonate (Na2CO3) or hydrates thereof.

9. A binding composition according to any one of claims 6-8, wherein the at least one activator comprises a sodium silicate comprising silicon dioxide (SiO2) and sodium oxide (Na2O).

10. A binding composition according to any one of claims 1-9, wherein the binding composition comprises silicon dioxide (SiO2) and aluminium(III) oxide (Al2O3) in a molar ratio of 2.0 - 3.0:1.0 (SiO2: Al2O3).

11. A binding composition according to any one of claims 1-10, wherein the binding composition comprises sodium oxide (Na2O) and aluminium(III) oxide (Al2O3) in a molar ratio of 0.70 - 1.30:1.00 (Na2O: Al2O3).

12. A binding composition according to any one of claims 1-11, wherein the binding composition further comprises water in a ratio to the binding composition of at least 1:2 (w/w, water:binding composition).

13. A binding composition according to any one of claims 1-12, wherein the binding composition further comprises at least one aggregate in a ratio to the mixture of a water treatment sludge and slag of at least 1:3 (w/w, aggregate:water treatment sludge+slag).

14. A binding composition according to any one of claims 1-13, wherein the water treatment sludge is a calcinated water treatment sludge.

15. A method for preparing a binding composition according to any one of claims 1-14, the method comprising:
(a) providing the water treatment sludge;
(b) optionally calcining the water treatment sludge;
(c) providing the slag; and
(d) admixing the water treatment sludge and slag to provide a mixture of a water treatment sludge and slag.
